(19) Europäisches Patentamt
European Patent Office
Office européen des brevets

(11) **EP 4 589 334 A1**

(12) **EUROPEAN PATENT APPLICATION**
published in accordance with Art. 153(4) EPC

(43) Date of publication:
**23.07.2025 Bulletin 2025/30**

(21) Application number: **23874727.3**

(22) Date of filing: **26.09.2023**

(51) International Patent Classification (IPC):
*G01S 7/481* (2006.01)  *G01C 3/06* (2006.01)
*G01S 17/10* (2020.01)  *G01S 17/931* (2020.01)
*G02B 3/00* (2006.01)  *G02B 5/02* (2006.01)
*G02B 5/04* (2006.01)

(52) Cooperative Patent Classification (CPC):
**G01C 3/06; G01S 7/481; G01S 17/10;**
**G01S 17/931; G02B 3/00; G02B 5/02; G02B 5/04**

(86) International application number:
**PCT/JP2023/035042**

(87) International publication number:
**WO 2024/075599 (11.04.2024 Gazette 2024/15)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **07.10.2022 JP 2022162126**

(71) Applicant: **Dexerials Corporation**
**Shimotsuke-shi, Tochigi 323-0194 (JP)**

(72) Inventors:
• **SOJIMA, Nobuaki**
  **Shimotsuke-shi, Tochigi 323-0194 (JP)**
• **SHIBUYA, Kazuyuki**
  **Shimotsuke-shi, Tochigi 323-0194 (JP)**
• **AKAGE, Yuichi**
  **Shimotsuke-shi, Tochigi 323-0194 (JP)**

(74) Representative: **Müller-Boré & Partner**
**Patentanwälte PartG mbB**
**Friedenheimer Brücke 21**
**80639 München (DE)**

(54) **LIGHT IRRADIATION DEVICE, OPTICAL RANGING DEVICE, AND VEHICLE**

(57) To allow a light irradiation device including no lens unit to carry out beam steering of narrowing an irradiation area within a distance measurement target area. There is provided a light irradiation device 2 that is provided in an optical distance measurement apparatus 1 and irradiates a distance measurement target area 5 with light. The light irradiation device 2 includes: a light source 20; and a light distribution element 30 configured to bend pieces of light in a plurality of bending directions. The pieces of light traveling from the light source 20 to the distance measurement target area 5.

FIG. 2

EP 4 589 334 A1

## Description

Technical Field

The present invention relates to a light irradiation device, an optical distance measurement apparatus, and a vehicle.

Background Art

An optical distance measurement apparatus is an apparatus that radiates light to a distance measurement target and detects light reflected by the distance measurement target to measure the distance to the distance measurement target, the direction of the distance measurement target, and the like. In recent years, optical distance measurement apparatuses have been used that use remote sensing technology such as LiDAR (Light Detection and Ranging) which uses light.

For example, Patent Literature 1 discloses a collision preventing system that measures the distance to an object present ahead and the direction of the object by using a photosensor equipped with a guide which is mounted on a smartphone. In addition, Patent Literature 2 discloses an omnidirectional distance measurement device having a plurality of time-of-flight (TOF: Time Of Flight) sensors radially disposed therein. The plurality of TOF sensors each measures distance by the TOF by light.

Citation List

Patent Literature

Patent Literature 1: JP 2021-047143A
Patent Literature 2: JP 2021-099278A

Summary of Invention

Technical Problem

In general, an optical distance measurement apparatus including a distance measurement sensor such as a LiDAR includes a light irradiation device (emitter) that radiates laser light emitted from a light source to a distance measurement target and a light detection device (receiver) that detects reflected light reflected by the distance measurement target. This optical distance measurement apparatus is requested to have both a larger light irradiation area (distance measurement target area) and greater light irradiation distance (measurable distance) by the light irradiation device.

However, in a case where the light source of the light irradiation device has constant power, the light irradiation area and the irradiation distance have a trade-off relationship. It is not therefore possible to increase the irradiation distance while increasing the irradiation area. Conversely, it is not also possible to increase the irradiation area while increasing the irradiation distance. Accordingly, a possible method for achieving an object of increasing both the irradiation area and the irradiation distance includes a method in which the irradiation area of light radiated from the light irradiation device is considerably narrowed and irradiation areas to be partially irradiated are sequentially switched within the distance measurement target area to scan (beam steering) the whole of the distance measurement target area.

In this regard, a large number of conventional light irradiation devices for LiDAR are each designed to achieve a wide-range irradiation area and short irradiation distance by using a lens unit that diffuses irradiation light. The lens unit is an optical device including a combination of a plurality of optical lenses. The lens unit makes it possible to change the light irradiation direction and the range of the irradiation area. A light irradiation device including the lens unit exhibits high beam steering performance, but has a problem that the size and the cost increase in comparison with a light irradiation device which does not include the lens unit. In contrast, the light irradiation device that does not include the lens unit has a problem that beam steering is not possible because of the principle thereof. That is, substantially the whole of a distance measurement target area is irradiated with light from a light source, and it is not thus possible to narrow an irradiation area within the distance measurement target area or achieve beam steering.

Accordingly, the present invention has been devised in view of the problems described above. An object of the present invention is to allow a light irradiation device including no lens unit to carry out beam steering of narrowing an irradiation area within a distance measurement target area.

Solution to Problem

To solve the problems described above, according to an aspect of the present invention, there is provided a light irradiation device that is provided in an optical distance measurement apparatus and irradiates a distance measurement target area with light. The light irradiation device includes: a light source; and a light distribution element configured to bend pieces of light in a plurality of bending directions. The pieces of light travel from the light source to the distance measurement target area.

The light irradiation device may further include a diffuser plate that is disposed between the light source and the distance measurement target area. The diffuser plate may be disposed to be opposed to the light distribution element.

The light source may include a plurality of light emitting elements arranged one-dimensionally or two-dimensionally. The light distribution element may bend a plurality of pieces of light emitted from the plurality of light emitting elements in bending directions different from each other. The light irradiation device may further include a control unit configured to control light emission of the plurality of light emitting elements.

The plurality of respective light emitting elements may correspond to a plurality of irradiation areas obtained by one-dimensionally or two-dimensionally dividing the distance measurement target area. The plurality of respective pieces of light emitted from the plurality of light emitting elements may be radiated to the plurality of irradiation areas through the light distribution element and the diffuser plate. The control unit may switch light emitting elements to emit pieces of light among the plurality of light emitting elements.

The light distribution element may include a plurality of bending units corresponding to the plurality of respective irradiation areas. The plurality of respective bending units may bend the plurality of pieces of light emitted from the plurality of light emitting elements in bending directions different from each other and guide the plurality of pieces of light to the plurality of irradiation areas.

The light distribution element may be disposed between the light source and the diffuser plate. The plurality of respective bending units may bend the plurality of pieces of light emitted from the plurality of light emitting elements in bending directions different from each other and emit the plurality of pieces of light to the diffuser plate. The diffuser plate may diffuse a plurality of pieces of respective bent light coming from the plurality of bending units and radiate a plurality of respective pieces of diffused light traveling in directions different from each other to the plurality of irradiation areas.

The light distribution element and the diffuser plate may be disposed in contact with each other, or disposed by being bonded with a bonding member in between.

The light distribution element may include a bending element including a prism structure.

The prism structures may be formed on both surfaces of the bending element.

A first prism structure may be formed on one surface of the bending element and a second prism structure may be formed on another surface of the bending element. The first prism structure and the second prism structure may extend in directions crossing each other in a plan view.

The light distribution element may include a mirror.

The diffuser plate may include a microlens array.

To solve the problems described above, according to another aspect of the present invention, there is provided an optical distance measurement apparatus including: the light irradiation device; and a light detection device configured to detect light radiated from the light irradiation device and reflected by a distance measurement target.

To solve the problems described above, according to another aspect of the present invention, there is provided a vehicle including the optical distance measurement apparatus.

Advantageous Effects of Invention

According to the present invention, it is possible for a light irradiation device including no lens unit to carry out beam steering of narrowing an irradiation area within a distance measurement target area.

Brief Description of Drawings

[FIG. 1] FIG. 1 is a schematic diagram illustrating an overall configuration of an optical distance measurement apparatus according to a first embodiment of the present invention.
[FIG. 2] FIG. 2 is a schematic diagram illustrating a conventional light irradiation device including a lens unit.
[FIG. 3] FIG. 3 is a schematic diagram illustrating a conventional light irradiation device including a diffuser plate.
[FIG. 4] FIG. 4 is a schematic diagram illustrating that the conventional light irradiation device including the lens unit is narrowing an irradiation area within a distance measurement target area by beam steering.
[FIG. 5] FIG. 5 is a schematic diagram illustrating a light irradiation device according to the first embodiment of the present invention.
[FIG. 6] FIG. 6 is a schematic diagram illustrating a beam steering operation by the light irradiation device according to the embodiment.
[FIG. 7] FIG. 7 is a plan view of a light distribution element included in the light irradiation device according to the embodiment.
[FIG. 8] FIG. 8 is an enlarged partial perspective view of a bending element including a prism structure according to the embodiment.
[FIG. 9] FIG. 9 includes an X-X cross-sectional view and a Y-Y cross-sectional view of the bending element illustrated in FIG. 7.
[FIG. 10] FIG. 10 is a schematic diagram illustrating a configuration example 1 of the light irradiation device according to the embodiment.
[FIG. 11] FIG. 11 is a schematic diagram illustrating a configuration example 2 of the light irradiation device according to the embodiment.
[FIG. 12] FIG. 12 is a schematic diagram illustrating a configuration example 3 of the light irradiation device according to the embodiment.
[FIG. 13] FIG. 13 is a schematic diagram illustrating a configuration example 4 of the light irradiation device according to the embodiment.

[FIG. 14] FIG. 14 is a schematic diagram illustrating a configuration example 5 of the light irradiation device according to the embodiment.

[FIG. 15] FIG. 15 is a schematic diagram illustrating a configuration example 6 of the light irradiation device according to the embodiment.

[FIG. 16] FIG. 16 is a graph illustrating relative intensity distribution of pieces of irradiation light obtained when all six light emitting elements emit pieces of light (are turned on) at same time in a light irradiation device according to an Example of the present invention.

[FIG. 17] FIG. 17 is a photograph illustrating the relative intensity distribution of the pieces of irradiation light obtained when all the six light emitting elements emit the pieces of light (are turned on) at the same time in the light irradiation device according to the Example.

[FIG. 18] FIG. 18 is a photograph illustrating relative intensity distribution of irradiation light obtained when one light emitting element at an upper left section among the six light emitting elements emits light in the light irradiation device according to the Example.

[FIG. 19] FIG. 19 is a photograph illustrating relative intensity distribution of irradiation light obtained when one light emitting element at an upper middle section among the six light emitting elements emits light in the light irradiation device according to the Example.

[FIG. 20] FIG. 20 is a photograph illustrating relative intensity distribution of irradiation light obtained when one light emitting element at an upper right section among the six light emitting elements emits light in the light irradiation device according to the Example.

Description of Embodiments

Hereinafter, an embodiment(s) of the present invention will be described in detail with reference to the appended drawings. Specific dimensions, materials, numerical values, and the like indicated in these embodiment(s) are mere exemplifications for facilitating understanding of the invention, and are not intended to limit the present invention unless otherwise specified. Note that, in the present specification and the drawings, elements having substantially the same function and configuration are denoted with the same reference numerals, thereby omitting repeated description, and illustration of elements not directly pertinent to the present invention is omitted.

[1. Overall Configuration of Optical Distance Measurement Apparatus]

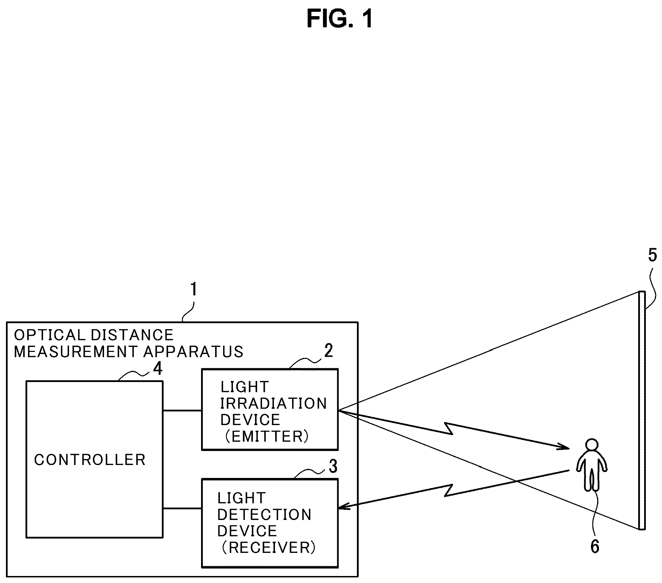

First, the overall configuration of an optical distance measurement apparatus 1 according to a first embodiment of the present invention will be described with reference to FIG. 1. FIG. 1 is a schematic diagram illustrating the overall configuration of the optical distance measurement apparatus 1 according to the present embodiment.

As illustrated in FIG. 1, the optical distance measurement apparatus 1 according to the present embodiment is an apparatus that radiates light to a distance measurement target area 5 and detects light reflected by a distance measurement target 6 to measure the distance to the distance measurement target 6, the direction of the distance measurement target 6, the size of the distance measurement target 6, the shape of the distance measurement target 6, and the like. The optical distance measurement apparatus 1 includes, for example, a distance measurement sensor that uses remote sensing technology such as LiDAR. It is preferable that a distance measurement method by the optical distance measurement apparatus 1 be, for example, a TOF method in which the optical distance measurement apparatus 1 measures the time of flight (TOF) by light that is the round-trip time elapsed from the emission of irradiation light to the reception of reflected light to calculate the distance to the distance measurement target 6. In addition, various distance measurement methods such as a triangulation method may be, however, used.

The optical distance measurement apparatus 1 according to the present embodiment is applicable to various technical fields in which remote sensing is used. For example, the optical distance measurement apparatus 1 is applicable to automated driving technology in the automotive field, ADAS (Advanced Driver-Assistance Systems: advanced driving assistant systems) or a traffic regulation radar apparatus, location surveying in the construction field, location surveying with an aircraft/artificial satellite, a cleaner robot, 3D-mapping measurement by various terminal apparatuses (such as a smartphone, smart glasses, a smart watch, a personal computer, and a tablet PC) that use technology such as AR (augmented reality)/MR (mixed reality)/VR (virtual reality), various kinds of measurement in geology/seismology/atmospheric physics/oceanography and the like, military application, or the like.

The optical distance measurement apparatus 1 according to the present embodiment is mounted, for example, on a vehicle such as an automobile, a bus, a truck, or a motorcycle and is favorably applicable to automated driving technology, ADAS, or the like. In this case, it is possible for the optical distance measurement apparatus 1 to measure the distance to the distance measurement target 6 present around the vehicle or present in the space ahead of the vehicle in particular and the direction of the distance measurement target 6 and create 3D mapping. This example is not, however, limitative. It is possible to mount the optical distance measurement apparatus 1 on various products in the various technical fields described above.

As illustrated in FIG. 1, the optical distance measurement apparatus 1 according to the present embodiment includes a light irradiation device 2 (emitter), a light detection device 3 (receiver), and a controller 4. This optical distance measurement apparatus 1 functions as a distance measurement sensor such as a LiDAR.

The light irradiation device 2 is a device (emitter) that irradiates the distance measurement target area 5 with light. The light irradiation device 2 radiates light emitted from a light source to the distance measurement target area 5. It is possible to use laser light having, for example, the wavelength band of near infrared rays, visible light rays, ultraviolet rays, or the like as the light radiated from the light irradiation device 2, but laser light having the wavelength band (e.g., 850 nm to 1550 nm) of near infrared rays, which are invisible to human eyes, is preferable. It is preferable that the light source included in the light irradiation device 2 be a laser light source such as a semiconductor laser which emits near infrared laser light.

The light irradiation device 2 includes, for example, a light source including a light emitting element that emits laser light, an optical element (such as a diffuser plate 40 described below) that diffuses the laser light, a cover glass, a housing, and the like (that are all unillustrated). The light irradiation device 2 emits pulsed laser light from the light source, diffuses the laser light by the optical element, and radiates the diffused light (irradiation light) to the distance measurement target area 5. Details of the configuration of this light irradiation device 2 will be described below.

The light detection device 3 is a device (receiver) that detects light (reflected light) radiated from the light irradiation device 2 and reflected by the distance measurement target 6. The light detection device 3 includes, for example, a cover glass, an optical filter, a light receiving unit including a light receiving element, and the like (that are all unillustrated). The optical filter cuts light (e.g., sunlight, illumination light, or the like) other than the reflected light reflected by the distance measurement target 6 as noise and transmits only light corresponding to the wavelength of the laser light emitted from the light irradiation device 2. This allows the light receiving element to have higher detection sensitivity to the reflected light. The light receiving element includes a photoelectric conversion element that receives incident reflected light and generates a voltage. The light receiving element includes, for example, an image sensor such as a CMOS (Complementary Metal Oxide Semiconductor) sensor or a CCD (Charge Coupled Device) sensor. The light receiving unit receives the reflected light from the distance measurement target 6, for example, by a plurality of light receiving elements two-dimensionally arranged on the light receiving surface, converts the light reception intensity at each of the pixel positions on the light receiving surface into an electric signal, and outputs the electric signal to the controller 4.

The controller 4 is an example of a control unit that controls the operations of the light irradiation device 2, the light detection device 3, and the other various devices included in the optical distance measurement apparatus 1. The controller 4 includes, for example, a processor, a memory, an input device, an output device, a communication device, and the like (that are all unillustrated).

The processor includes, for example, a CPU (Central Processing Unit) or another microprocessor. The processor executes a program stored in a memory or another storage medium. This causes various kinds of processing of the optical distance measurement apparatus 1 to be executed and it is possible to achieve various functions defined by the program.

The memory is a storage medium that stores a program and other various kinds of data. The memory includes, for example, a RAM (Random Access Memory), a ROM (Read Only Memory), and the like. The ROM is a non-volatile memory that stores a program to be used by the processor, data which brings the program into operation, and the like. The RAM is a volatile memory that temporarily stores a variable to be used for processing executed by the processor, an arithmetic parameter, and data such as an arithmetic result. The program stored in the ROM is read out by the RAM and executed by the processor such as a CPU.

The controller 4 controls the light irradiation device 2 and the light detection device 3 to execute a distance measurement operation by the optical distance measurement apparatus 1. For example, the controller 4 creates three-dimensional mapping by repeatedly radiating laser light by the light irradiation device 2 and detecting reflected light by the light detection device 3 while three-dimensionally scanning the distance measurement target area 5. In this case, the controller 4 calculates the distance or the direction from the optical distance measurement apparatus 1 to the distance measurement target 6 on the basis of the time difference (i.e., the time of flight by light: TOF) between an emission timing of laser light by the light irradiation device 2 and a detection timing of reflected light by the light detection device 3.

In this way, the optical distance measurement apparatus 1 creates three-dimensional mapping indicating the distance to the distance measurement target 6 present in the distance measurement target area 5 and the direction of the distance measurement target 6 by scanning the distance measurement target area 5 with laser light. To this end, the optical distance measurement apparatus 1 is requested to radiate laser light at as wide an angle (i.e., field of view (FOV)) as possible. Laser light emitted from the light source of the light irradiation device 2 does not expand so much and the laser light as emitted thus results in a narrow field of view for a distance measurement sensor. It is therefore preferable to diffuse the laser light by using a diffuser plate or the like, radiate the diffused light to the distance measurement target area 5 in a wide field of view, and increase the irradiation area.

The diffuser plate that diffuses laser light includes a microlens array. It is possible to obtain a desired diffusion angle (i.e., field of view) by changing the shape of a microlens. However, as described above, a distance measurement sensor such as a TOF sensor has a trade-off relationship between the size of a laser light irradiation area (the range of the distance measurement target area 5 in the horizontal direction and the vertical direction) and laser light irradiation distance (measurable distance). It is thus preferable to balance the size of the laser light irradiation area and the laser light irradiation distance with each other and determine the size of the irradiation area.

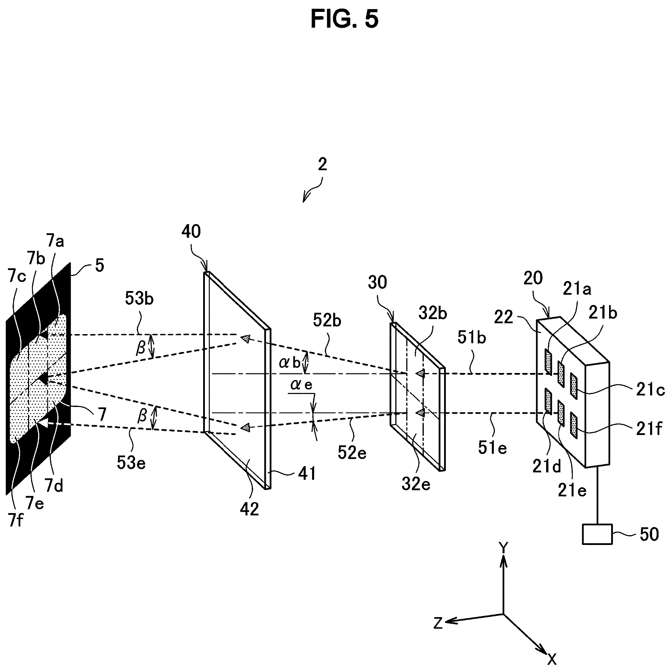

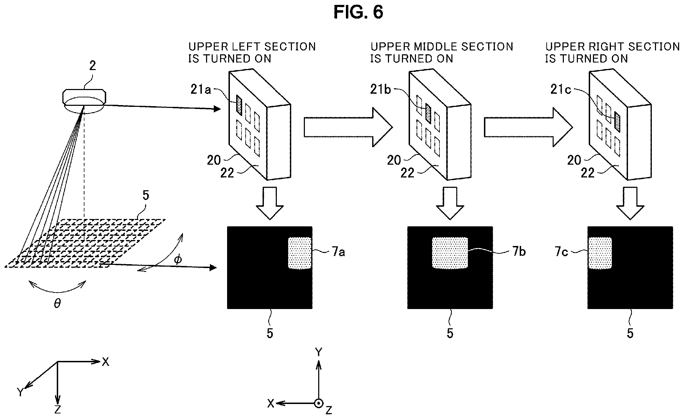

Accordingly, an object of the optical distance measurement apparatus 1 according to the present embodiment is to increase both the whole of the laser light irradiation area (distance measurement target area 5) and the irradiation distance in the light irradiation device 2 that diffuses laser light by using a diffuser plate. The present embodiment is therefore characterized in that the distance measurement target area 5 is divided into a plurality of irradiation areas 7 (see FIG. 5 described below) and it is possible to carry out beam steering of scanning the distance measurement target area 5 by sequentially switching the irradiation areas 7 to be partially irradiated with pieces of laser light in the distance measurement target area 5 (see FIG. 6 described below).

[2. Details of Background Art]

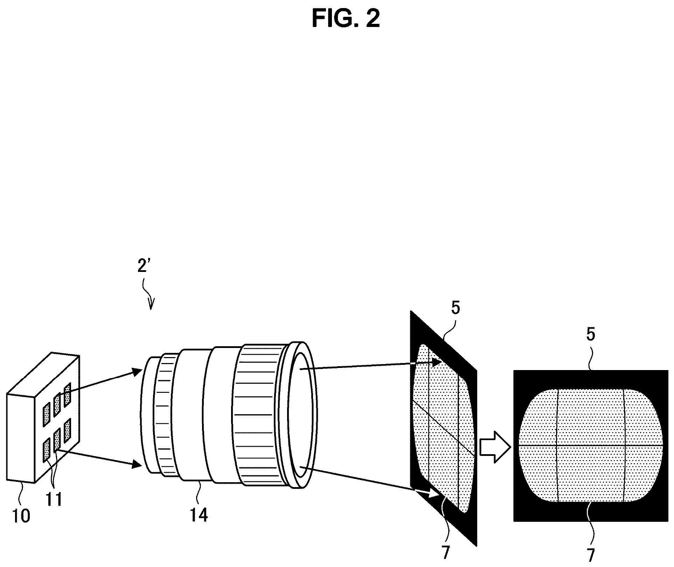

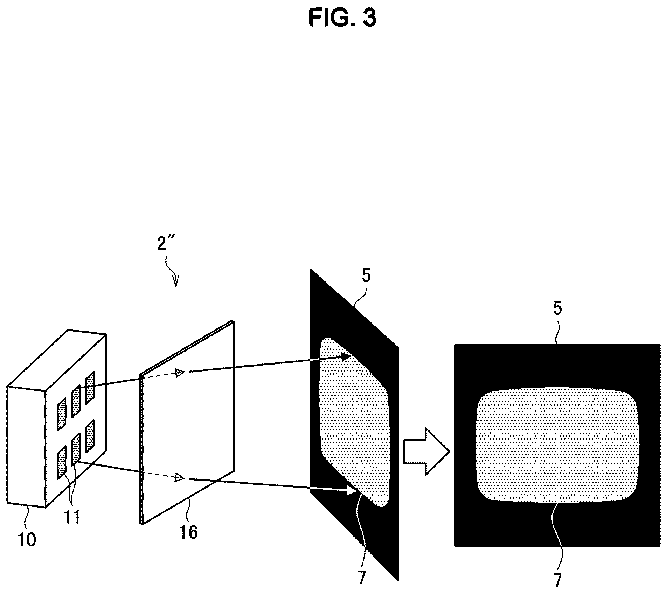

Next, before the light irradiation device 2 according to the present embodiment is described in detail, the configurations and problems of a conventional light irradiation device 2' and a conventional light irradiation device 2" will be described in detail as the background art of the light irradiation device 2 (emitter) according to the present embodiment with reference to FIGS. 2 to 5. FIG. 2 is a schematic diagram illustrating the conventional light irradiation device 2' including a lens unit 14. FIG. 3 is a schematic diagram illustrating the conventional light irradiation device 2" including a diffuser plate 16.

As illustrated in FIG. 2, the light irradiation device 2' includes a light source 10 including a plurality of light emitting elements 11 that each emits laser light and the lens unit 14 that diffuses the laser light emitted from the light source 10. The lens unit 14 is an optical device including a combination of a plurality of optical lenses and the like. It is possible for the lens unit 14 to diffuse laser light coming from the light source 10 at a desired diffusion angle and increase or decrease the irradiation area 7. In addition, it is possible for the lens unit 14 to bend laser light coming from the light source 10 at a desired bending angle and shift the irradiation area 7 within the distance measurement target area 5.

In addition, as illustrated in FIG. 3, the light irradiation device 2" includes the light source 10 including the plurality of light emitting elements 11 that each emits laser light and the diffuser plate 16 that diffuses the laser light from the light source 10. A microlens array is formed on a surface of the diffuser plate 16. It is possible for the diffuser plate 16 to diffuse laser light coming from the light source 10 at a predetermined diffusion angle corresponding to the shape of a microlens. Additionally, it is possible to adjust the diffusion angle of laser light by the diffuser plate 16 by changing the shape of a microlens when the diffuser plate 16 is designed, but it is not possible to change the diffusion angle after the diffuser plate 16 is manufactured.

These conventional light irradiation devices 2' and 2" each radiate laser light diffused by the lens unit 14 or the diffuser plate 16 to the distance measurement target area 5. An area that is actually irradiated with the diffused laser light (irradiation light) within the distance measurement target area 5 is the irradiation area 7. In any of the examples of FIGS. 2 and 3, the irradiation area 7 is a horizontally long area having a substantially rectangular shape.

Here, the problems of the conventional light irradiation devices 2' and 2" illustrated in FIGS. 2 and 3 will be described. It is possible for the light irradiation device 2' including the lens unit 14 illustrated in FIG. 2 to increase or decrease the size of the irradiation area 7 within the distance measurement target area 5 and shift the irradiation area 7 within the distance measurement target area 5 by changing the disposition of the optical lenses, the directions that the optical lenses face, or the like in the lens unit 14. It is thus possible for the light irradiation device 2' to carry out beam steering of scanning the distance measurement target area 5 with irradiation light by narrowing the irradiation area 7 to a partial area within the distance measurement target area 5 and sequentially switching the partial irradiation areas 7. It is, however, necessary to provide the light irradiation device 2' including the lens unit 14 illustrated in FIG. 2 with a mechanism of allowing an optical lens to move or a mechanism of driving the optical lens in the lens unit 14 or the lens unit 14 including a plurality of optical lenses. This raises a problem that the device size and cost increase in comparison with the light irradiation device 2" including the diffuser plate 16 illustrated in FIG. 3. In recent years, light irradiation devices have been requested to be smaller, but there is a limit to decrease the size of the light irradiation device 2' including the lens unit 14.

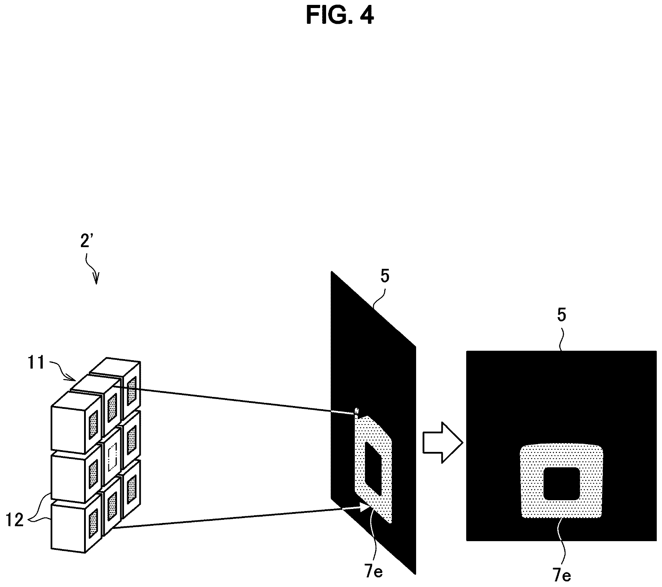

In addition, there is also a problem that the light irradiation device 2' including the lens unit 14 illustrated in FIG. 2 has an unirradiated portion in a case where part of the light source 10 is damaged. Specifically, it is assumed as illustrated in FIG. 4 that each of the light emitting elements 11 of the light source 10 includes a vertical cavity surface emitting laser (VCSEL: Vertical Cavity Surface Emitting Laser) and the light source 10 includes a VCSEL array. Note that FIG. 4 schematically illustrates that the light irradiation device 2' including the lens unit 14 is narrowing an irradiation area 7e within the distance measurement target area 5 by beam steering. In this example of FIG. 4, the light emitting element 11 including a VCSEL includes nine mesas 12 arranged on the light emitting surface vertically and horizontally (three rows and three columns). Here, in a case where the one mesa 12 in the middle among the nine mesas 12 is damaged and no longer emits light, the irradiation area 7e irradiated by the light emitting element 11 including the damaged mesa 12 has an unirradiated portion like the middle portion thereof is missing as illustrated in FIG. 4. In this way, in a case where beam steering is carried out for the irradiation area 7 with the light irradiation device 2' including the lens unit 14, it is not possible to address the broken light emitting element 11 that is part of the light source 10 and this also raises a problem that the irradiation area 7e has an unirradiated portion (i.e., distance-unmeasurable area).

In contrast, the light irradiation device 2" including the diffuser plate 16 illustrated in FIG. 3 has a fixed positional relationship between the light source 10 and the diffuser plate 16 and the diffuser plate 16 also has a constant diffusion angle. It is not therefore possible to narrow and shift the range of the irradiation area 7 within the distance measurement target area 5 when the distance measurement target area 5 is irradiated with laser light diffused by the diffuser plate 16. It is not thus possible for the light irradiation device 2" including the diffuser plate 16 to carry out beam steering because of the principle thereof. This raises a problem that it is not possible to increase both the range of the irradiation area 7 and the irradiation distance by using beam steering.

As described above, there have been conventionally problems that the device size and cost increase like the light irradiation device 2' including the lens unit 14 illustrated in FIG. 2 described above and damaged part of the light source 10 results in an unirradiated portion. To solve the problems of this light irradiation device 2' including the lens unit 14, it is therefore requested to use a light irradiation device including a diffuser plate that does not raise the problems and allow the light irradiation device including the diffuser plate to carry out beam steering.

Accordingly, the present embodiment adopts a configuration in which the distance measurement target area 5 is divided into a plurality of irradiation areas 7a to 7f (see FIG. 5) in the light irradiation device 2 including a diffuser plate, and it is possible to carry out beam steering of partially radiating diffused light to each of the divided irradiation areas 7a to 7f to scan the distance measurement target area 5. In this beam steering, the respective divided irradiation areas 7a to 7f are sequentially irradiated with pieces of light partially and the whole of the distance measurement target area 5 is thereby scanned. This beam steering makes it possible to increase both the range of the distance measurement target area 5 (the total range of the plurality of divided irradiation areas 7a to 7f) and the light irradiation distance. Hereinafter, a configuration that allows the light irradiation device 2 according to the present embodiment to carry out beam steering will be described in detail.

[3. Configuration of Light Irradiation Device]

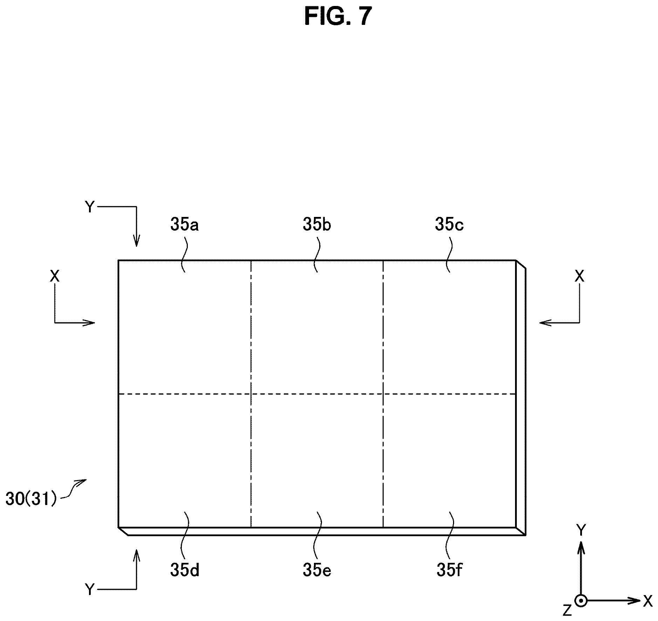

Next, the configuration of the light irradiation device 2 (emitter) according to the present embodiment will be described with reference to FIGS. 5 to 7. FIG. 5 is a schematic diagram illustrating the light irradiation device 2 according to the present embodiment. FIG. 6 is a schematic diagram illustrating a beam steering operation by the light irradiation device 2 according to the present embodiment. FIG. 7 is a plan view of a light distribution element 30 (bending element 31) included in the light irradiation device 2 according to the present embodiment.

As illustrated in FIG. 5, the light irradiation device 2 according to the present embodiment includes a light source 20, the light distribution element 30, the diffuser plate 40, and a control unit 50.

The diffuser plate 40 is disposed between the light source 20 and the distance measurement target area 5. The light distribution element 30 is disposed between the light source 20 and the distance measurement target area 5 and disposed to be opposed to the diffuser plate 40. Note that the light distribution element 30 is disposed between the light source 20 and the diffuser plate 40 in the example of FIG. 5, but this example is not limitative. The light distribution element 30 may be disposed between the diffuser plate 40 and the distance measurement target area 5.

The light source 20 is a device that generates and emits light to be radiated to the distance measurement target area 5. As described above, it is possible to use laser light having, for example, the wavelength band of near infrared rays, visible light rays, ultraviolet rays, or the like as the light emitted from the light source 20, but laser light having the wavelength band (e.g., 850 nm to 1550 nm) of near infrared rays, which are invisible to human eyes, is preferable.

The light source 20 is a surface light source including, for example, a plurality of light emitting elements 21a to 21f (each generically referred to as a "light emitting element 21" below in some cases) that emits a plurality of pieces of laser light 51a to 51f (each generically referred to as "laser light 51" below in some cases). Specifically, as illustrated in FIG. 5, each of the light emitting elements 21 of the light source 20 includes a surface emitting semiconductor laser, for example, a vertical cavity surface emitting laser (VCSEL). The light source 20 includes, for example, a VCSEL array including a plurality of VCSELs. The plurality of light emitting elements 21 is one-dimensionally or two-dimensionally arranged on a light emitting surface 22 of the light source 20. In the example of FIG. 5, the six light emitting elements 21a to 21f each including a VCSEL are two-dimensionally arranged on the light emitting surface 22 of the light source 20 vertically and horizontally (e.g., two rows and three columns). The two-dimensional arrangement directions of the plurality of light emitting elements 21 are not, however, limited to the two directions of the vertical direction and the horizontal direction. The two-dimensional arrangement directions may be two obliquely crossing directions. In addition, the plurality of light emitting elements 21 may be arranged one-dimensionally (e.g., one row and six columns, six rows and one column, or the like) along any one direction. Furthermore, the number of light emitting elements 21 to be installed is not limited to six in the illustrated example, but any number of light emitting elements 21 greater than or equal to two may be installed.

The plurality of these light emitting elements 21a to 21f emits the plurality of pieces of laser light 51a to 51f parallel with each other to the light distribution element 30. In the example of FIG. 5, the six light emitting elements 21a to 21f respectively emit the six pieces of laser light 51a to 51f to the light distribution element 30. The optical axes of the plurality of pieces of laser light 51a to 51f are parallel with each other. The laser light 51 emitted from each of these light emitting elements 21 may be, for example, diffused light or collimated parallel light. However, to increase the irradiation distance of the laser light 51 and achieve the beam steering illustrated in FIG. 6 for the farther distance measurement target area 5, it is preferable that the laser light 51 be diffused light as close to parallel light as possible. In addition, in the present embodiment, a laser light source including an LD (Laser Diode) that emits the laser light 51 is used as the light source 20, but this example is not limitative. The light source may be, for example, a light source including another light emitting element such as an LED (Light Emitting Diode) or a lamp.

Note that the optical axis direction of the laser light 51 emitted from the light emitting element 21 will be referred to as a "Z direction", the horizontal direction of a plane vertical to the "Z direction" will be referred to as an "X direction", and the vertical direction of the plane will be referred to as a "Y direction" in the following description. The Z direction is a direction vertical to the light emitting surface 22 of the light source 20. An XY plane is a plane parallel with the light emitting surface 22. The X direction is the horizontal direction of the light emitting surface 22 of the light source 20 and the Y direction is the vertical direction of the light emitting surface 22 of the light source 20.

It is possible for the respective light emitting elements 21a to 21f to be independently turned on (emit light) and turned off (emit no light). This makes it possible to turn on only some of the plurality of light emitting elements 21a to 21f and turn off the other light emitting elements 21. This operation of turning on and off the light emitting elements 21 is controlled by the control unit 50.

The control unit 50 controls the operations of the respective units of the light irradiation device 2. The control unit 50 may include, for example, a dedicated processor or the like provided in the light irradiation device 2 or the controller 4 (see FIG. 1) or the like of the light irradiation device 2 described above. The control unit 50 has a function of controlling the light emission of the plurality of light emitting elements 21 of the light source 20. The control unit 50 controls a beam steering operation by the light irradiation device 2 by switching light emitting elements to emit pieces of light among the plurality of light emitting element 21. For example, to carry out the beam steering illustrated in FIG. 6, the control unit 50 sequentially switches the light emitting elements 21 to be turned on (emit light) among the plurality of light emitting elements 21 in order set in advance.

As illustrated in FIGS. 5 and 6, the plurality of light emitting elements 21a to 21f included in the light source 20 respectively corresponds to the plurality of irradiation areas 7a to 7f (each generically referred to as the "irradiation area 7" below in some cases) obtained by one-dimensionally or two-dimensionally dividing the distance measurement target area 5.

In the example of FIG. 5, the irradiation area 7 within the distance measurement target area 5 is divided into the six irradiation areas 7a to 7f. The six irradiation areas 7a to 7f are two-dimensionally divided within the distance measurement target area 5 vertically and horizontally (e.g., two rows and three columns). As with the arrangement of the light emitting elements 21 described above, the two-dimensional arrangement directions of the plurality of divided irradiation areas 7a to 7f are not, however, limited to the two directions of the vertical direction and the horizontal direction. The two-dimensional arrangement directions may be two obliquely crossing directions. In addition, the plurality of irradiation areas 7a to 7f may be arranged one-dimensionally (e.g., one row and six columns, six rows and one column, or the like) along any one direction.

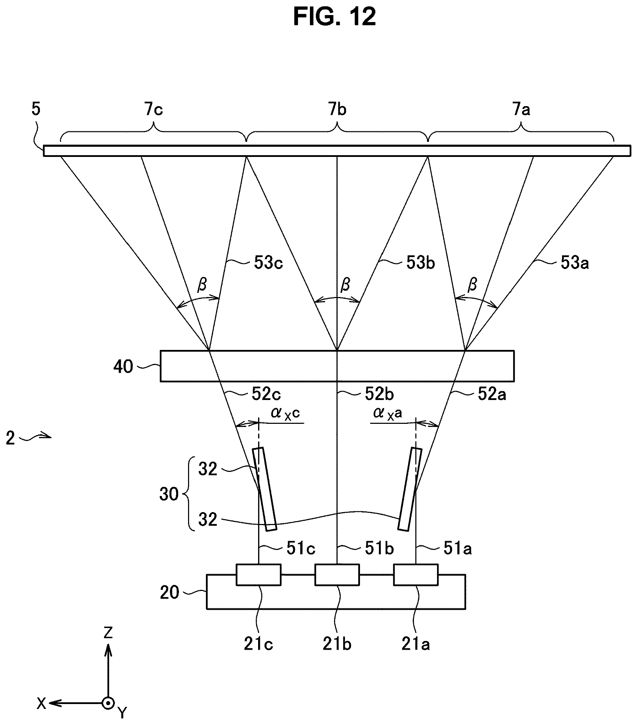

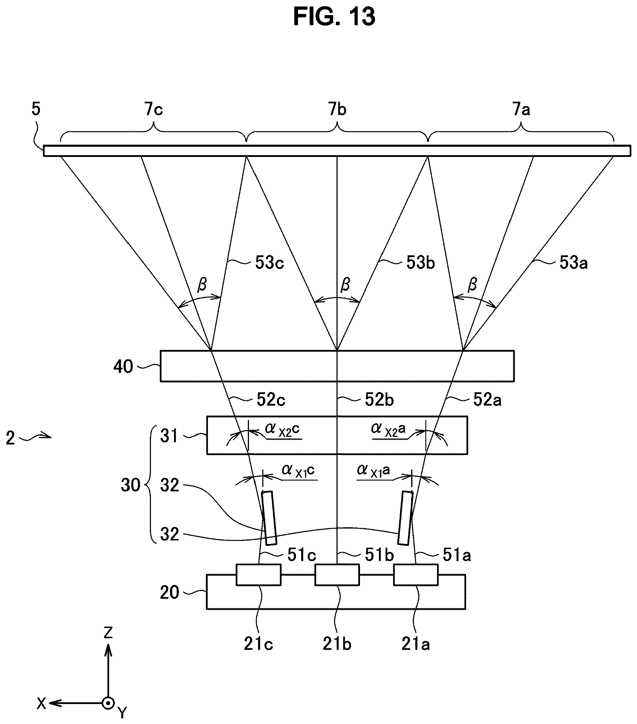

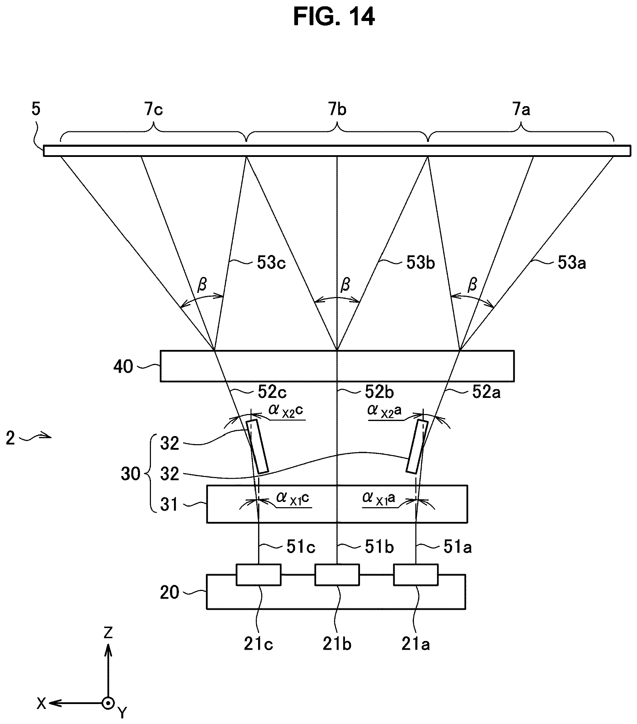

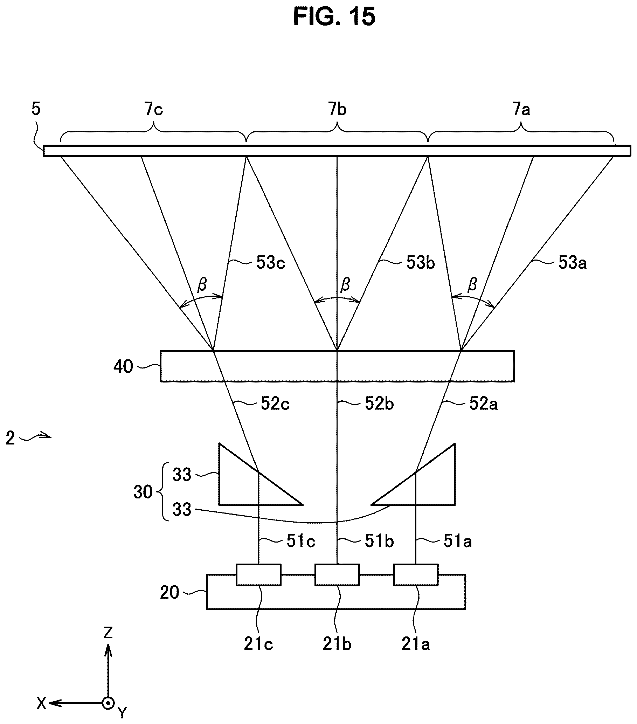

Next, the light distribution element 30 will be described. The light distribution element 30 is an optical element that bends pieces of light traveling from the light source 20 to the distance measurement target area 5 in a plurality of bending directions at bending angles α different from each other. The light distribution element 30 distributes light to expand light traveling to the distance measurement target area 5 by bending pieces of light from the light source 20 in a plurality of bending directions. The light distribution element 30 includes an optical element having a function of bending light. For example, the light distribution element 30 includes the bending element 31 including minute prism structures 37 and 38 on surfaces (see FIGS. 7 to 11), a plurality of mirrors 32 (see FIG. 12), a plurality of prisms 33 (see FIG. 15), a combination of these optical elements (see FIGS. 13 and 14), or the like. FIG. 5 illustrates an example in which the light distribution element 30 is the one bending element 31 including the prism structures 37 and 38. The specific configurations of the optical elements (such as the bending element 31, the mirrors 32, and the prisms 33) included in the light distribution element 30 will be described below.

The light distribution element 30 is disposed to be opposed to the diffuser plate 40. In the example of FIG.

5, the light distribution element 30 is interposed between the light source 20 and the diffuser plate 40 and disposed to be opposed to the surface of both surfaces of the diffuser plate 40 closer to the light source 20. The light distribution element 30 may be, however, disposed closer to the distance measurement target area 5 than the diffuser plate 40 to be opposed to the surface of both surfaces of the diffuser plate 40 closer to the distance measurement target area 5.

In the example of FIG. 5, the light distribution element 30 and the diffuser plate 40 are illustrated to be disposed apart from each other for the convenience of description, but it is preferable that the light distribution element 30 and the diffuser plate 40 be disposed in contact with each other. Alternatively, it is preferable that the light distribution element 30 and the diffuser plate 40 be bonded with an unillustrated bonding member (e.g., an adhesive, a double-sided tape, or the like) in between and disposed close to each other. This makes it possible to decrease the total size of the light distribution element 30 and the diffuser plate 40 by bringing the light distribution element 30 and the diffuser plate 40 close to each other and it is thus possible to decrease the size of the light irradiation device 2. In addition, similarly, to decrease the size of the light irradiation device 2, it is preferable to dispose the light distribution element 30 and the light source 20 in contact with each other or dispose the light distribution element 30 and the light source 20 close to each other.

The light distribution element 30 having a function of bending the plurality of pieces of laser light 51 emitted from the plurality of light emitting elements 21 of the light source 20 in bending directions different from each other. If described in detail, the light distribution element 30 bends the plurality of pieces of laser light 51a to 51f emitted from the plurality of light emitting elements 21 in bending directions different from each other at bending angles $\alpha$a to $\alpha$f (each generically referred to as the "bending angle $\alpha$" below in some cases) different from each other. The bending angle $\alpha$ is an angle obtained by combining a bending angle $\alpha_X$ and a bending angle $\alpha_Y$. The bending angle $\alpha_X$ is a bending angle in the X direction and the bending angle $\alpha_Y$ is a bending angle in the Y direction. In addition, the bending direction is the propagating direction of light 52 bent by the light distribution element 30.

For example, as illustrated in FIG. 5, the light distribution element 30 bends the laser light 51b emitted from the light emitting element 21b disposed at the upper middle section of the light source 20 upward in the Y direction at a predetermined bending angle $\alpha_Y$b and does not bend the laser light 51b in the X direction. In addition, the light distribution element 30 bends the laser light 51e emitted from the light emitting element 21e disposed at the lower middle section of the light source 20 downward in the Y direction at a predetermined bending angle $\alpha_Y$e and does not bend the laser light 51e in the X direction. Here, for example, "$\alpha_Y$b = +12.5° and $\alpha_Y$e = -12.5°" and

"$\alpha_X$b = $\alpha_X$e = 0°" hold.

The laser light 51b bent by the light distribution element 30 serves as bent light 52b. The bent light 52b is light propagating in a bending direction bent upward with respect to the propagating direction (Z direction) of the laser light 51b. The angle difference between the optical axis of the bent light 52b and the optical axis of the laser light 51b is the bending angle $\alpha_Y$b. In contrast, the laser light 51e bent by the light distribution element 30 serves as bent light 52e. The bent light 52e is light propagating in a bending direction bent downward with respect to the propagating direction (Z direction) of the laser light 51e. The angle difference between the optical axis of the bent light 52e and the optical axis of the laser light 51e is the bending angle $\alpha_Y$e.

In this way, to bend the pieces of laser light 51a to 51f from the plurality of light emitting elements 21a to 21f in bending directions different from each other, the light distribution element 30 includes a plurality of bending units 35a to 35f (each generically referred to as a "bending unit 35" below in some cases) as illustrated in FIG. 7.

As illustrated in FIGS. 5 and 7, for example, the light distribution element 30 includes the bending element 31 including a prism structure (e.g., a light guide plate including a prism structure formed on a surface thereof). In this case, the plurality of respective bending units 35 corresponds to a plurality of regions obtained by dividing the bending element 31 having a flat-plate shape in the X and Y directions. In any of the examples of FIGS. 5 and 7, the bending element 31 includes the six bending units 35a to 35f and the respective bending units 35a to 35f correspond to regions obtained by dividing the bending element 31 having a rectangular flat-plate shape into six. The six bending units 35a to 35f are two-dimensionally divided on the surface of the bending element 31 vertically and horizontally (e.g., two rows and three columns).

The plurality of bending units 35a to 35f of this light distribution element 30 (bending element 31) respectively corresponds to the plurality of light emitting elements 21a to 21f of the light source 20. Furthermore, the plurality of bending units 35a to 35f also corresponds to the plurality of divided irradiation areas 7a to 7f described above, respectively.

The plurality of bending units 35a to 35f then has functions of bending pieces of incident light at the bending angles $\alpha$a to $\alpha$f different from each other. It is thus possible for the plurality of bending units 35a to 35f to respectively bend the pieces of laser light 51a to 51f coming from the plurality of light emitting elements 21a to 21f of the light source 20 in bending directions different from each other and guide the pieces of laser light 51a to 51f to the plurality of irradiation areas 7a to 7f different from each other.

For example, as illustrated in FIG. 5, the laser light 51b emitted from the light emitting element 21b is bent upward in the Y direction at the bending angle $\alpha_Y$b

described above to serve as the bent light 52b when passing through the bending unit 35b of the light distribution element 30. The bent light 52b is the laser light 51 traveling in a first bending direction set in advance. After that, the bent light 52b is diffused to serve as diffused light 53b when passing through the diffuser plate 40, and the irradiation area 7b is partially irradiated with the diffused light 53b. In contrast, the laser light 51e emitted from the light emitting element 21e is bent downward in the Y direction at the bending angle $\alpha_Y$e described above to serve as the bent light 52e when passing through the bending unit 35e of the light distribution element 30. The bent light 52e is laser light traveling in a second bending direction different from the first bending direction described above. After that, the bent light 52e is diffused to serve as diffused light 53e when passing through the diffuser plate 40, and the irradiation area 7e is partially irradiated with the diffused light 53e.

Additionally, as with the arrangement of the light emitting elements 21 described above, the two-dimensional arrangement directions of the plurality of divided bending units 35 are not limited to the two directions of the vertical direction and the horizontal direction described above. The two-dimensional arrangement directions may be two obliquely crossing directions. In addition, the plurality of bending units 35a to 35f may be arranged one-dimensionally (e.g., one row and six columns, six rows and one column, or the like) along any one direction.

In addition, in any of the examples illustrated in FIGS. 5 and 7, the plurality of bending units 35 having different bending functions is integrally included as the one bending element 31. This makes it possible to include the one bending element 31 alone in the light distribution element 30, offering advantages that it is possible to reduce the number of parts of the light distribution element 30, decrease the size of the light distribution element 30, and handle the light distribution element 30 more easily. This example is not, however, limitative. For example, the plurality of bending units 35 may be separately included by using different bending elements.

Next, the diffuser plate 40 will be described. The diffuser plate 40 has a function of diffusing laser light (bent light 52) coming from the light distribution element 30. That is, the diffuser plate 40 diffuses the plurality of pieces of bent light 52 coming from the light distribution element 30 at respective diffusion angles β set in advance and emits a plurality of pieces of diffused light 53.

The diffuser plate 40 has, for example, a flat-plate shape or a curved-plate shape. The diffuser plate 40 illustrated in FIG. 5 has, for example, a rectangular flat-plate shape. The shape and the thickness of the diffuser plate 40 may be any shape and any thickness depending on the shape, the configuration, and the like of the light irradiation device 2 in which the diffuser plate 40 is implemented. It is preferable that the surface area of the diffuser plate 40 be larger than the area of the light distribution element 30. This allows all the plurality of pieces of bent light 52 bent and diffused by the light distribution element 30 in a plurality of bending directions to enter the diffuser plate 40.

The diffuser plate 40 includes a film-shaped or plate-shaped base member 41 and a microlens array 42 formed on a surface on the base member 41.

The base member 41 is formed by using a transparent material capable of transmitting light. For example, the base member 41 may be formed by using a material having a light transmittance of 70 % or more in the wavelength band of near infrared rays. The base member 41 may be formed by using, for example, a publicly known resin such as polymethyl methacrylate (polymethyl methacrylate: PMMA), polyethylene terephthalate (Polyethylene terephthalate: PET), polycarbonate (polycarbonate: PC), a cycloolefin copolymer (Cyclo Olefin Copolymer: COC), a cycloolefin polymer (Cyclo Olefin Polymer: COP), or triacetylcellulose (Triacetylcellulose: TAC), or another organic material. Alternatively, the base member 41 may be formed by using a publicly known glass material such as quartz glass, borosilicate glass, or super white glass, or another inorganic material.

The microlens array 42 is provided on at least one (principal surface) of the surfaces of the base member 41. The microlens array 42 is an aggregate of a plurality of microlenses arranged on the surface of the base member 41. Each of the microlenses is, for example, a minute optical lens on the order of several tens of μm. The microlens has a convex structure (convex lens) or a concave structure (concave lens) having a light diffusion function. For example, the microlens has an opening width (lens diameter) of about several tens of μm and a radius of curvature of about several tens of μm. The surface shape of the microlens may be a spherical shape or an aspherical shape. In addition, the surface shapes of the plurality of microlenses may be uniform shapes or random shapes different from each other. In addition, the microlenses may be regularly arranged or randomly disposed on the surface of the base member 41. It is possible to adjust the diffusion angle β at which light is diffused by the diffuser plate 40 by changing the surface shapes or the disposition of these microlenses.

In the diffuser plate 40 according to the present embodiment, for example, a plurality of microlenses is formed over the whole of the surface of the base member 41 in substantially uniform surface shape and disposition. Even when the bent light 52 from the light distribution element 30 enters the surface of the diffuser plate 40 at any position, the diffuser plate 40 therefore diffuses the bent light 52 at substantially the same diffusion angle β and emit the diffused light 53. This example is not, however, limitative. The surface of the diffuser plate 40 may be divided into a plurality of regions and the surface shape or the like of the microlens array 42 of the diffuser plate 40 may be changed for each of the regions such that the diffusion angle β is changed for each of the regions. This makes it possible to make the diffusion angles β different between the regions of the diffuser plate 40 and individually adjust diffusion angles βa to βf of a plurality of pieces of diffused light 53a to 53f emitted from the diffuser plate 40. It is thus possible to further increase the degree of freedom of beam steering in which the light distribution element 30 and the diffuser plate 40 are used.

[4. Beam Steering Operation]

The configurations of the light source 20, the light distribution element 30, the diffuser plate 40, and the control unit 50 of the light irradiation device 2 according to the present embodiment have been described so far. Next, a beam steering operation by the light irradiation device 2 according to the present embodiment will be described with reference to FIGS. 5 and 6.

The light irradiation device 2 according to the present embodiment described above partially radiates the plurality of respective pieces of laser light 51a to 51f emitted from the plurality of light emitting elements 21a to 21f of the light source 20 to the plurality of irradiation areas 7a to 7f within the distance measurement target area 5 through the light distribution element 30 and the diffuser plate 40.

In this case, the plurality of bending units 35a to 35f of the light distribution element 30 respectively bends the plurality of pieces of laser light 51a to 51f coming from the plurality of light emitting elements 21a to 21f in bending directions different from each other and emits pieces of bent light 52a to 52f to the diffuser plate 40. The plurality of pieces of bent light 52a to 52f bent by the light distribution element 30 serves as a whole as light obtained by diffusing all the plurality of pieces of laser light 51a to 51f because of a light distribution function of the light distribution element 30. The diffuser plate 40 diffuses the plurality of respective pieces of bent light 52a to 52f coming from the plurality of bending units 35a to 35f of the light distribution element 30. The diffuser plate 40 then respectively radiates the plurality of pieces of diffused light 53a to 53f traveling in directions different from each other to the plurality of irradiation areas 7a to 7f within the distance measurement target area 5. Here, the irradiation areas 7a to 7f are areas obtained by dividing the distance measurement target area 5 and the area of each of the individual irradiation areas 7a to 7f is smaller than the area of the whole of the distance measurement target area 5. It is possible to cover the whole or the most of the distance measurement target area 5 by combining the plurality of these irradiation areas 7a to 7f.

For example, it will be assumed in the example of FIG. 5 that the range of the distance measurement target area 5 is a range ($\theta \times \varphi = 90° \times 50°$) defined by a field of view $\theta$ (see FIG. 6) of 90° in the horizontal direction (X direction) and a field of view $\varphi$ (see FIG. 6) of 50° in the vertical direction (Y direction). It will be then assumed that a diffusion angle $\beta_X$ by the diffuser plate 40 in the horizontal direction (X direction) is 30° and a diffusion angle $\beta_Y$ by the diffuser plate 40 in the vertical direction (Y direction) is 25° (30° × 25°).

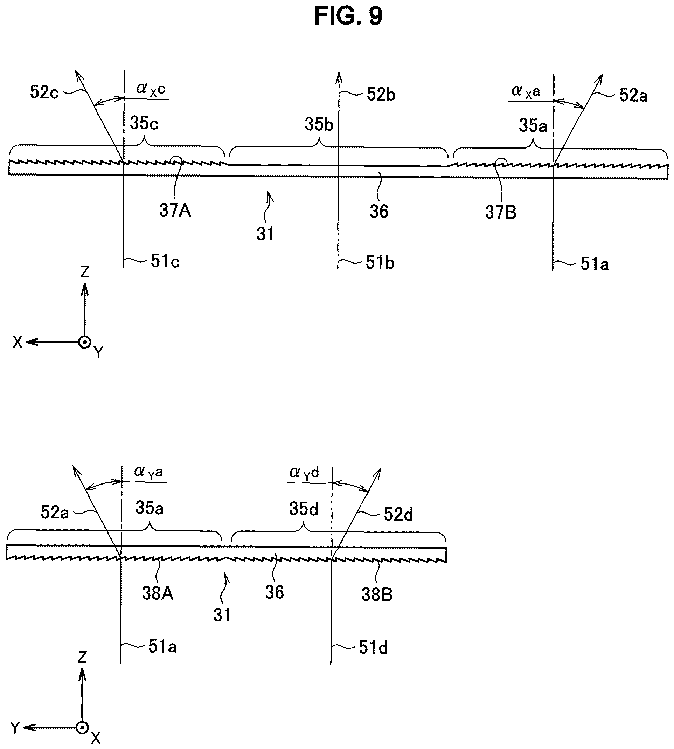

In this case, it is favorable to set bending angles $\alpha_X$a and $\alpha_X$d (see FIG. 9) in the X direction by the two left bending units 35a and 35d of the light distribution element 30 in the X direction to -30°, set bending angles $\alpha_X$c and $\alpha_X$f (see FIG. 9) in the X direction by the two right bending units 35c and 35f in the X direction to +30°, and set bending angles $\alpha_X$b and $\alpha_X$e in the X direction by the two middle bending units 35b and 35e in the X direction to ±0°. In addition, it is favorable to set bending angles $\alpha_Y$a, $\alpha_Y$b, and $\alpha_Y$c in the Y direction by the three upper bending units 35a to 35c of the light distribution element 30 in the Y direction to +25° and set bending angles $\alpha_Y$d, $\alpha_Y$e, and $\alpha_Y$f in the Y direction by the three lower bending units 35d to 35f in the Y direction to -25°. This allows the whole of the light distribution element 30 to bend the optical axes of the pieces of laser light 51 from the six light emitting elements 21 of the light source 20 within a bending range of (30° × 25°). It is thus possible to cover the range ($\theta \times \varphi$ = 90° × 50°) of the distance measurement target area 5 described above by combining the bending range (30° × 25°) by this light distribution element 30 and the diffusion range (30° × 25°) by the diffuser plate 40.

Such relationships between the fields of view $\theta$ and $\varphi$ of the distance measurement target area 5 and the respective parameters of the light distribution element 30 and the diffuser plate 40 are mathematically expressed as in the following Expressions (1) to (6). Note that the numerical values in the parentheses in the following mathematical expressions are the specific numerical values of the respective parameters in the cases of the configuration examples illustrated in FIGS. 5, 9, and 10.

<X Direction>

$$\theta = \beta_X \times n_X \qquad \dots (1)$$

$$\alpha_{Xk} = (\theta/n_X) \times m_{Xk} \qquad \dots (2)$$

($\theta$ = 90°, $\beta_X$ = 30°, $n_X$ = 3, and $m_{Xk}$ = -1, 0, or +1)

$$0° < \gamma_X < \beta_X \qquad \dots (3)$$

$\theta$: a field of view indicating the irradiation range of the distance measurement target area 5 in the X direction

$\beta_X$: a diffusion angle by the diffuser plate 40 in the X direction

$n_X$: the number of light emitting elements 21 arranged in the X direction

$\alpha_{Xk}$: a bending angle by each of the bending units 35 of the light distribution element 30 in the X direction

$m_{Xk}$: an ordinal number indicating the light emitting element 21 disposed at the ±k-th in the X direction on the basis of the light emitting element 21 disposed at the center in the X direction (e.g., $m_{Xa}$ of the light emitting element 21a disposed at the -1-st represents "-1", $m_{Xb}$ of the light emitting element 21b disposed at the 0-th represents "0", and $m_{Xc}$ of the light emitting element 21c disposed at the +1-st represents "+1".)

$\gamma_X$: the diffusion angle of the whole of light emitted from the light source 20 in the X direction

<Y Direction>

$$\varphi = \beta_Y \times n_Y \qquad ... \ (4)$$

$$\alpha_{Yk} = (\varphi/n_Y) \times m_{Yk} \qquad ... \ (5)$$

($\varphi = 50°$, $\beta_Y = 25°$, $n_Y = 2$, and $m_{Yk} = -1$ or $+1$)

$$0° < \gamma_Y < \beta_Y \qquad ... \ (6)$$

$\varphi$: a field of view indicating the irradiation range of the distance measurement target area 5 in the Y direction

$\beta_Y$: a diffusion angle by the diffuser plate 40 in the Y direction

$n_Y$: the number of light emitting elements 21 arranged in the Y direction

$\alpha_{Yk}$: a bending angle by each of the bending units 35 of the light distribution element 30 in the Y direction

$m_{Yk}$: an ordinal number indicating the light emitting element 21 disposed at the $\pm k$-th in the Y direction on the basis of the light emitting element 21 disposed at the center in the Y direction (e.g., $m_{Ya}$ of the light emitting element 21a disposed at the +1-st represents "+1" and $m_{Yd}$ of the light emitting element 21d disposed at the -1-st represents "-1".)

$\gamma_Y$: the diffusion angle of the whole of light emitted from the light source 20 in the Y direction

As illustrated in FIG. 6, the control unit 50 then executes a beam steering operation on the distance measurement target area 5 by switching light emitting elements to be turned on (emit light) among the plurality of light emitting elements 21a to 21f of the light source 20 described above.

As illustrated in FIG. 6, first, the light emitting element 21a disposed at the upper left section when facing the light emitting surface 22 of the light source 20 is turned on and the other light emitting elements 21b to 21f are turned off. This guides only the laser light 51a emitted from the light emitting element 21a to the irradiation area 7a at the upper right section within the distance measurement target area 5 through the light distribution element 30 and the diffuser plate 40 described above and only the irradiation area 7a is irradiated with the diffused light 53a. In this case, the other irradiation areas 7b to 7e are not irradiated with the pieces of diffused light 53b to 53f.

Subsequently, when the light emitting element 21a described above is turned off and only the light emitting element 21b disposed at the upper middle section of the light emitting surface 22 of the light source 20 is turned on, only the irradiation area 7b at the upper middle section within the distance measurement target area 5 is irradiated with the diffused light 53b. After that, when the light emitting element 21b described above is turned off and only the light emitting element 21c disposed at the upper right section when facing the light emitting surface 22 of the light source 20 is turned on, only the irradiation area 7c at the upper left section within the distance measurement target area 5 is irradiated with the diffused light 53c. Similarly, operations of switching on and off the light emitting elements 21d, 21e, and 21f are also repeated as described above to sequentially irradiate the irradiation areas 7d, 7e, and 7f within the distance measurement target area 5 with the pieces of diffused light 53d, 53e, and 53f.

In this way, in the light irradiation device 2 according to the present embodiment, the plurality of light emitting elements 21a to 21f of the light source 20 is sequentially switched on and off. This sequentially switches the irradiation areas 7a to 7f to be partially irradiated with the pieces of diffused light 53a to 53f within the distance measurement target area 5. That is, the irradiation areas 7a, 7b, 7c, 7d, 7e, and 7f of the distance measurement target area 5 are partially irradiated one by one with the pieces of diffused light 53 in this order. In this way, it is possible to execute a beam steering operation of scanning the wide-range distance measurement target area 5 by using the respective narrow-range irradiation areas 7a to 7f.

It is possible in the light irradiation device 2 according to the present embodiment to partially and concentratedly irradiate the partial irradiation areas 7a to 7f of the distance measurement target area 5 with the respective pieces of laser light 51a to 51f respectively emitted from the light emitting elements 21a to 21f by this beam steering operation in spite of a structure including the diffuser plate 40. According to the present embodiment, it is thus possible to concentratedly irradiate any of the narrow irradiation areas 7a to 7f. This makes it possible to increase the irradiation distance from the light irradiation device 2 to the distance measurement target area 5 in comparison with the conventional light irradiation device 2" (see FIG. 3) including the diffuser plate 16 described above. Furthermore, it is possible to increase the range of the distance measurement target area 5 that allows for light irradiation by increasing the number of light emitting elements 21 installed in the light source 20 and the number of irradiation areas 7 within the distance measurement target area 5 in the X and Y directions and increasing the bending angle $\alpha$ and the diffusion angle $\beta$.

This allows the light irradiation device 2 including the diffuser plate 40 to increase both the light irradiation range and the irradiation distance and increase the distance-measurable space in comparison with a conventional device.

In addition, the light irradiation device 2 according to the present embodiment includes a simple diffusion structure that diffuses light by using the diffuser plate 40. It is thus possible to considerably reduce the size and the cost of the light irradiation device 2 in comparison with the conventional light irradiation device 2' (see FIG. 2) including the lens unit 14 described above. In addition, even if some of a plurality of mesas included in each of the light emitting elements 21 are damaged or broken (see FIG. 4), light emitted from an undamaged mesa therearound is diffused by the diffuser plate 40 to allow the irradiation region corresponding to a damaged mesa to be covered. The irradiation area 7e thus has no unirradiated portion (see FIG. 4) unlike the conventional light irradiation device 2' including the lens unit 14. This makes it possible to prevent the damaged or broken light emitting element 21 from resulting in a distance-unmeasurable area. Thus, in a case where beam steering is carried out for the irradiation area 7 by using the light irradiation device 2 according to the present embodiment, it is possible to address some damaged or broken light emitting elements 11 of the light source 10 and prevent the distance measurement target area 5 from having an unirradiated portion (i.e., distance-unmeasurable area).

Note that the light emitting elements 21 to be turned on and the irradiation areas 7 are sequentially switched one by one in the beam steering operation illustrated in FIG. 6, but this example is not limitative. While two or more of the plurality of light emitting elements 21 described above may be turned on at the same time and the plurality of irradiation areas 7 is irradiated at the same time with the plurality of pieces of diffused light 53, the plurality of light emitting elements 21 to be turned on and the plurality of irradiation areas 7 may be sequentially switched. For example, the one or two or more light emitting elements 21 may be switched on and off from the light emitting elements 21 disposed on both left and right sides of the light emitting surface 22 of the light source 20 to the light emitting elements 21 disposed in the middle. This also allows beam steering of narrowing the irradiation area 7 within the distance measurement target area 5 to be carried out.

[5. Configuration of Light Distribution Element]

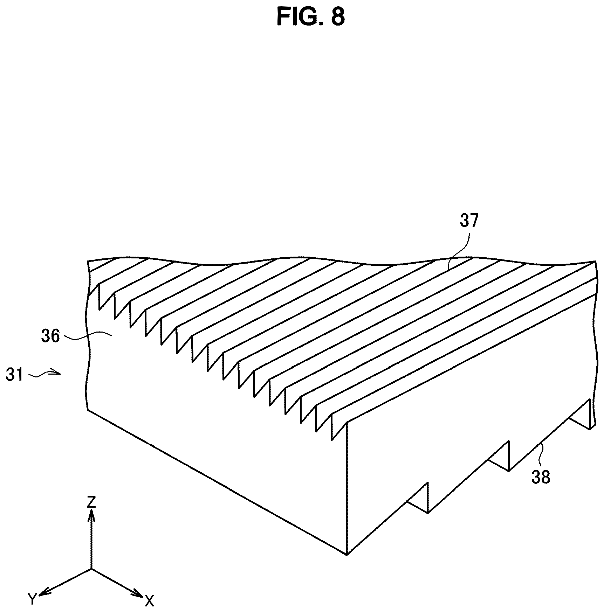

Next, an example in which the light distribution element 30 provided in the light irradiation device 2 according to the present embodiment is the bending element 31 including the prism structures 37 and 38 will be described in detail with reference to FIGS. 7 to 9. FIG. 8 is an enlarged partial perspective view of the bending element 31 including the prism structures 37 and 38 according to the present embodiment. FIG. 9 includes an X-X cross-sectional view and a Y-Y cross-sectional view of the bending element 31 illustrated in FIG. 7.

As illustrated in FIGS. 7 to 9, it is possible to include the bending element 31 (e.g., prism sheet) including the prism structures 37 and 38 that each bend incident light in the light distribution element 30 according to the present embodiment. The bending element 31 may have, for example, any shape such as a flat-plate shape, a curved-plate shape, or a block shape, but the bending element 31 illustrated in FIG. 7 has, for example, a rectangular flat-plate shape. The shape and the thickness of the bending element 31 may be any shape and any thickness depending on the shape, the configuration, and the like of the light irradiation device 2 in which the bending element 31 is implemented. It is preferable that the surface area of the bending element 31 be larger than the area of the light emitting surface 22 of the light source 20. This allows all the pieces of laser light 51 emitted from the plurality of light emitting elements 21 of the light source 20 to enter the bending element 31 as illustrated in FIG. 5. Note that the size and the shape of the bending element 31 are not limited to those of the illustrated example, and it is possible to adopt any size and any shape as long as it is possible to attain the bending function of the bending element 31 for the laser light 51.

As illustrated in FIGS. 8 to 9, the bending element 31 includes a film-shaped or plate-shaped base member 36 and the prism structures 37 and 38 formed on the surfaces of the base member 36.

The base member 36 is formed by using a transparent material capable of transmitting light. For example, the base member 36 may be formed by using a material having a light transmittance of 70 % or more in the wavelength band of near infrared rays. As with the base member 41 of the diffuser plate 40 described above, the base member 36 of the bending element 31 may be formed by using, for example, a publicly known resin such as polymethyl methacrylate, polyethylene terephthalate, polycarbonate, a cycloolefin copolymer, a cycloolefin polymer, or triacetylcellulose, or another organic material. Alternatively, the base member 36 may be formed by using a publicly known glass material such as quartz glass, borosilicate glass, or super white glass, or another inorganic material.

The prism structures 37 and 38 are uneven structures in each of which a large number of minute prism shapes are repeatedly formed. The individual prism shapes each have, for example, a right-triangle cross-sectional shape obtained by combining an inclined surface having a predetermined inclination angle and vertical surfaces. The prism structures 37 and 38 each having a serrated cross-sectional shape are each configured by arranging a plurality of prism shapes on the surface of the bending element 31 at predetermined pitch.

In the present embodiment, the respective prism structures 37 and 38 are formed on both surfaces (the front surface and the back surface) of the base member 36 of the bending element 31. For example, the first prism structure 37 is formed on one surface of the bending element 31 and the second prism structure 38 is formed on the other surface of the bending element 31. The first prism structure 37 and the second prism structure 38 extend in directions crossing each other in a plan view of the XY plane.

Specifically, as illustrated in FIGS. 8 and 9, the first prism structure 37 formed on the front surface of the bending element 31 includes a plurality of prism shapes extending in the Y direction. The plurality of prism shapes of this first prism structure 37 is arranged at relatively high pitch and the prism shapes each have a relatively sharply inclined surface. In contrast, the second prism structure 38 formed on the back surface of the bending element 31 includes a plurality of prism shapes extending in the X direction. The plurality of prism shapes of this second prism structure 38 is arranged at relatively low pitch and the prism shapes each have a relatively gently inclined surface. The bending angle $\alpha_X$ of light by the first prism structure 37 and the bending angle $\alpha_Y$ of light by the second prism structure 38 are thus different and $\alpha_X > \alpha_Y$ holds.

In this way, the first prism structure 37 extends in the Y direction and the second prism structure 38 extends in the X direction. That is, the first prism structure 37 and the second prism structure 38 extend in directions orthogonal to each other in a plan view of the XY plane. In this configuration, as illustrated in FIG. 9, the first prism structure 37 bends the laser light 51 entering the bending element 31 from the light source 20 in the X direction. In contrast, the second prism structure 38 bends the laser light 51 entering the bending element 31 from the light source 20 in the Y direction. It is thus possible to compositely bend the laser light 51 in the two directions of the X and Y directions by using the one bending element 31.

Here, as illustrated in FIG. 7, the bending element 31 includes the plurality of bending units 35a to 35f having different bending functions. The pieces of laser light 51a to 51f respectively enter the bending units 35a to 35f of the bending element 31 from the plurality of light emitting elements 21a to 21f of the light source 20. The bending units 35a to 35f bend the pieces of laser light 51a to 51f in bending directions different from each other at the bending angles $\alpha$ different from each other.

For example, the bending unit 35a bends the laser light 51a at the negative bending angle $\alpha_X a$ in the X direction and the positive bending angle $\alpha_Y a$ in the Y direction ($\alpha_X a = -30°$ and $\alpha_Y a = +12.5°$). The bending unit 35b bends the laser light 51b at the positive bending angle $\alpha_Y b$ in the Y direction and does not bend the laser light 51b in the X direction ($\alpha_X b = 0°$ and $\alpha_Y b = +12.5°$). The bending unit 35c bends the laser light 51c at the positive bending angle $\alpha_X c$ in the X direction and the positive bending angle $\alpha_Y c$ in the Y direction ($\alpha_X c = +30°$ and $\alpha_Y c = +12.5°$). The bending unit 35d bends the laser light 51d at the negative bending angle $\alpha_X d$ in the X direction and the negative bending angle $\alpha_Y d$ in the Y direction ($\alpha_X d = -30°$ and $\alpha_Y d = -12.5°$). The bending unit 35e bends the laser light 51e at the negative bending angle $\alpha_Y e$ in the Y direction and does not bend the laser light 51e in the X direction ($\alpha_X e = 0°$ and $\alpha_Y e = -12.5°$). The bending unit 35f bends the laser light 51f at the positive bending angle $\alpha_X f$ in the X direction and the negative bending angle $\alpha_Y f$ in the Y direction ($\alpha_X f = +30°$ and $\alpha_Y f = -12.5°$).

In this way, the bending element 31 according to the present embodiment is divided into the six bending units 35a to 35f. To cause the respective bending units 35a to 35f to attain bending functions different from each other, the prism structures 37 and 38 are then formed on the front surface and the back surface of the bending element 31 in manners different between the bending units 35a to 35f as illustrated in FIG. 9.

Specifically, as illustrated in FIG. 9, a prism structure 37A that bends the laser light 51a at the negative bending angle $\alpha_X a$ in the X direction is formed on the front surface of the bending unit 35a on one of the sides of the front surface of the bending element 31. In contrast, a prism structure 37B that bends the laser light 51c at the positive bending angle $\alpha_X c$ in the X direction is formed on the front surface of the bending unit 35c on the other side. These prism structure 37A and prism structure 37B are both included in the first prism structure 37 formed on the front surface of the bending element 31, but the prism shapes have opposite inclination directions between the prism structure 37A and the prism structure 37B. In addition, the prism structures 37A and 37B are not formed on the front surface of the bending unit 35b in the middle and the surface of the bending unit 35b is flat. The laser light 51b is not therefore bent in the X direction by the bending unit 35b, but passes therethrough.

In addition, a prism structure 38A that bends the laser light 51a at the positive bending angle $\alpha_Y a$ in the Y direction is formed on the back surface of the bending unit 35a on one of the sides of the back surface of the bending element 31. In contrast, a prism structure 38B that bends the laser light 51d at the negative bending angle $\alpha_Y d$ in the Y direction is formed on the back surface of the bending unit 35d on the other side. These prism structure 38A and prism structure 38B are both included in the second prism structure 38 formed on the back surface of the bending element 31, but the prism shapes have opposite inclination directions between the prism structure 38A and the prism structure 38B.

As described above, in the bending element 31 according to the present embodiment, the prism structures 37A and 37B having different shapes are partially formed on the front surface of the bending element 31 as the first prism structure 37. Furthermore, the prism structures 38A and 38B having different shapes are partially formed on the back surface of the bending element 31 as the second prism structure 38. The prism structures 37A and 37B extending in the Y direction and the prism structures 38A and 38B extending in the X direction then extend in directions orthogonal to each other. This makes it possible to achieve the six bending units 35a to 35f having different bending functions in the one bending element 31.

[6. Configuration Examples of Light Irradiation Device]

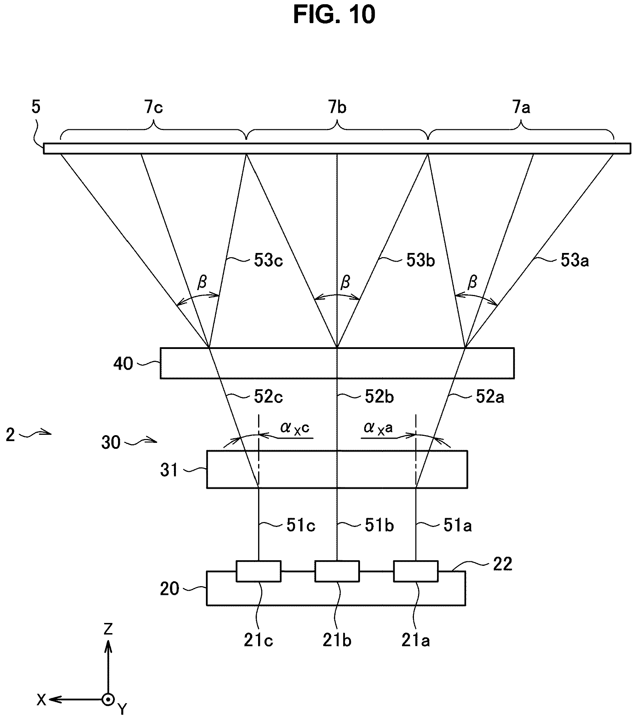

Next, configuration examples of the light irradiation device 2 according to the present embodiment will be described with reference to FIGS. 10 to 15. FIGS. 10 to 15 are schematic diagrams respectively illustrating configuration examples 1 to 6 of the light irradiation device 2 according to the present embodiment. Note that the respective parameters of the light distribution element 30 and the diffuser plate 40 are designed in the following configuration examples 1 to 6 to satisfy the conditions of Expressions (1) to (6) described above.

(1) Configuration Example 1

As illustrated in FIG. 10, the light irradiation device 2 according to the configuration example 1 of the present embodiment includes the light source 20 including the plurality of light emitting elements 21a to 21f, the bending element 31 serving as the light distribution element 30, and the diffuser plate 40. In the light irradiation device 2 according to the configuration example 1, the light source 20, the bending element 31, and the diffuser plate 40 are disposed in this order in a light irradiation path from the light source 20 to the distance measurement target area 5.

The light distribution element 30 (bending element 31) according to the configuration example 1 illustrated in FIG. 10 corresponds to the light distribution element 30 (bending element 31) illustrated in any of FIGS. 5 to 9 described above and includes the prism structures 37 and 38 described above. The bending element 31 includes, for example, the six bending units 35a to 35f (see FIG. 7) and the bending units 35a to 35f respectively bend the pieces of laser light 51a to 51f in different bending directions at the different bending angles $\alpha a$ ($\alpha_X a$ and $\alpha_Y a$) to $\alpha f$ ($\alpha_X f$ and $\alpha_Y f$).

The pieces of respective bent light 52a to 52f bent by the bending element 31 are diffused by the diffuser plate 40 at the predetermined diffusion angles $\beta$ and serve as the pieces of diffused light 53a to 53f. The irradiation areas 7a to 7f of the distance measurement target area 5 are respectively irradiated with the pieces of diffused light 53a to 53f.

As described above, it is possible in the light irradiation device 2 according to the configuration example 1 for the bending element 31 serving as the light distribution element 30 to bend the plurality of respective pieces of laser light 51 from the light source 20 and guide the plurality of pieces of laser light 51 to the respective irradiation areas 7. This makes it possible to partially radiate pieces of light to the respective irradiation areas 7 by switching on and off the plurality of light emitting elements 21 and favorably execute the beam steering operation described above.

In addition, according to the configuration example 1, the light distribution element 30 includes the one thin bending element 31. This makes it possible to decrease the size of the light distribution element 30 and it is thus also possible to decrease the size of the light irradiation device 2. Furthermore, it is possible to further decrease the size of the light irradiation device 2 by disposing the bending element 31 and the diffuser plate 40 in contact or close to each other.

(2) Configuration Example 2

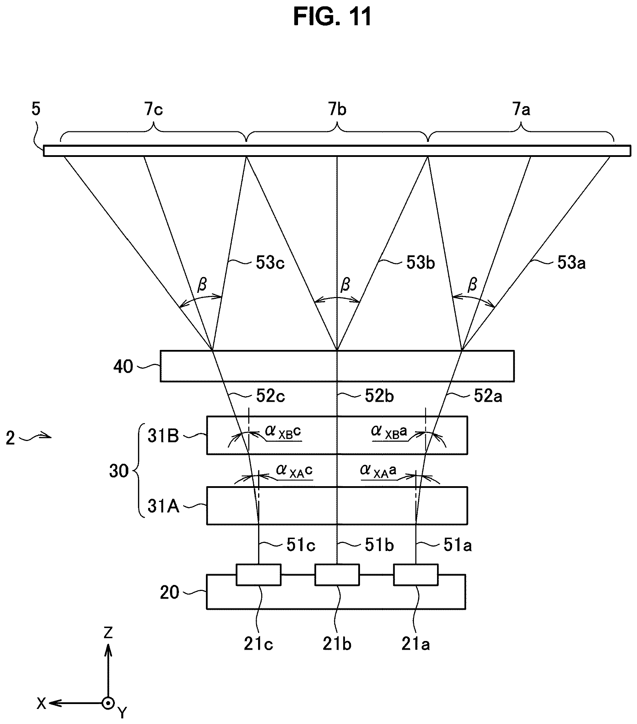

As illustrated in FIG. 11, the light irradiation device 2 according to the configuration example 2 of the present embodiment includes the light source 20, two bending elements 31A and 31B serving as the light distribution element 30, and the diffuser plate 40. In the light irradiation device 2 according to the configuration example 2, the light source 20, the bending element 31A, the bending element 31B, and the diffuser plate 40 are disposed in this order in a light irradiation path from the light source 20 to the distance measurement target area 5.

The light distribution element 30 according to the configuration example 2 illustrated in FIG. 11 includes the two bending elements 31A and 31B (first and second bending elements) instead of the one bending element 31 according to the configuration example 1 illustrated in FIG. 10 described above. The bending elements 31A and 31B each include the prism structures 37 and 38 similar to those of the examples illustrated in FIGS. 8 to 9 described above on the front surface and the back surface thereof. The respective bending elements 31A and 31B therefore have functions of bending the pieces of laser light 51 from the light source 20 in the X and Y directions.

In the configuration example 2, the laser light 51 from the light source 20 first enters the bending element 31A and is primarily bent at predetermined primary bending angles $\alpha_{XA}$ and $\alpha_{YA}$. Subsequently, the bent light primarily bent by the bending element 31A enters the bending element 31B and is secondarily bent at predetermined secondary bending angles $\alpha_{XB}$ and $\alpha_{YB}$. The bent light 52 emitted from the bending element 31B enters the diffuser plate 40 and is diffused, and the irradiation area 7 of the distance measurement target area 5 is then irradiated with the bent light 52.

In this way, the two bending elements 31A and 31B according to the configuration example 2 serve for the bending function of the one bending element 31 according to the configuration example 1 described above for the laser light 51. That is, the bending angle $\alpha_{XA}$ in the X direction by the bending element 31A according to the configuration example 2 and the bending angle $\alpha_{XB}$ in the X direction by the bending element 31B amount to the bending angle $\alpha_X$ in the X direction by the bending element 31 according to the configuration example 1 ($\alpha_X = \alpha_{XA} + \alpha_{XB}$). Similarly, the bending angle $\alpha_{YA}$

in the Y direction by the bending element 31A and the bending angle $\alpha_{YB}$ in the Y direction by the bending element 31B amount to the bending angle $\alpha_Y$ in the Y direction by the bending element 31 according to the configuration example 1 ($\alpha_Y = \alpha_{YA} + \alpha_{YB}$).

It is possible to favorably address the large bending angle $\alpha$ requested from the light distribution element 30 by using the plurality of bending elements 31A and 31B as the light distribution element 30 as in this configuration example 2. This offers the large bending angles $\alpha_X$ and $\alpha_Y$ for the light distribution element 30 and it is thus possible to further increase the fields of view $\theta$ and $\varphi$ of the light irradiation device 2 and irradiate the wider-range distance measurement target area 5 with light.

(3) Configuration Example 3

As illustrated in FIG. 12, the light irradiation device 2 according to the configuration example 3 of the present embodiment includes the light source 20, the plurality of mirrors 32 serving as the light distribution element 30, and the diffuser plate 40. In the light irradiation device 2 according to the configuration example 3, the light source 20, the mirrors 32, and the diffuser plate 40 are disposed in this order in a light irradiation path from the light source 20 to the distance measurement target area 5.

The light distribution element 30 according to the configuration example 3 illustrated in FIG. 12 includes the plurality of mirrors 32 instead of the bending element 31 according to the configuration example 1 illustrated in FIG. 10 described above. Each of the mirrors 32 is an optical element having a mirror surface that reflects light. The mirror 32 is disposed to be inclined at a predetermined angle with respect to the optical axis direction (Z direction) of the laser light 51 from the light source 20. The mirror 32 reflects the laser light 51 from the light source 20 to bend the laser light 51 at the predetermined bending angles $\alpha_X$ and $\alpha_Y$ and emit the bent light 52 traveling in a predetermined bending direction.

It is possible to change the bending angle $\alpha_X$ at which the laser light 51 is bent in the X direction by adjusting the inclination angle of the mirror 32 in the X direction. Similarly, it is possible to change the bending angle $\alpha_Y$ at which the laser light 51 is bent in the Y direction by adjusting the inclination angle of the mirror 32 in the Y direction. In addition, the plurality of mirrors 32 having different inclination angles in the X and Y directions is installed in association with the plurality of light emitting elements 21a to 21f of the light source 20. This allows the plurality of mirrors 32 differently disposed to face different directions to bend the pieces of laser light 51a to 51f from the light emitting elements 21a to 21f in desired bending directions (X and Y directions) at the bending angles $\alpha_X a$ to $\alpha_X f$ and $\alpha_Y a$ to $\alpha_Y f$ different from each other. From this viewpoint, the plurality of mirrors 32 according to the configuration example 3 corresponds to the plurality of bending units included in the light distribution element 30.

It is possible to bend the plurality of pieces of laser light 51 from the light source 20 as with the bending element 31 according to the configuration example 1 described above by using the plurality of mirrors 32 as the light distribution element 30 as in this configuration example 3. In addition, the bending element 31 according to the configuration example 1 is likely to cause a ghost when the laser light 51 is bent, but the mirrors 32 according to the configuration example 3 also have advantages that the mirrors 32 according to the configuration example 3 cause no ghosts.

(4) Configuration Example 4

As illustrated in FIG. 13, the light irradiation device 2 according to the configuration example 4 of the present embodiment includes the light source 20, the plurality of mirrors 32 and the bending element 31 serving as the light distribution element 30, and the diffuser plate 40. In the light irradiation device 2 according to the configuration example 4, the light source 20, the mirrors 32, the bending element 31, and the diffuser plate 40 are disposed in this order in a light irradiation path from the light source 20 to the distance measurement target area 5.

The light distribution element 30 according to the configuration example 4 illustrated in FIG. 13 includes the plurality of mirrors 32 and the bending element 31 described above. That is, the light distribution element 30 according to the configuration example 4 illustrated in FIG. 13 is an example of a combination of the mirrors 32 according to the configuration example 3 illustrated in FIG. 12 and the bending element 31 including the prism structures 37 and 38 according to the configuration example 1 illustrated in FIG. 10.

In the configuration example 4, the laser light 51 from the light source 20 first enters any of the mirrors 32 and is primarily bent at predetermined primary bending angles $\alpha_{X1}$ and $\alpha_{Y1}$. Subsequently, the bent light primarily bent by the mirror 32 enters the bending element 31 and is secondarily bent at predetermined secondary bending angles $\alpha_{X2}$ and $\alpha_{Y2}$. The bent light 52 emitted from the bending element 31 enters the diffuser plate 40 and is diffused, and the irradiation area 7 of the distance measurement target area 5 is then irradiated with the bent light 52.

In this way, the mirrors 32 and the bending element 31 according to the configuration example 4 serve for the bending function of the one bending element 31 according to the configuration example 1 described above for the laser light 51. That is, the bending angle $\alpha_{X1}$ in the X direction by any of the mirrors 32 according to the configuration example 4 and the bending angle $\alpha_{X2}$ in the X direction by the bending element 31 amount to the bending angle $\alpha_X$ in the X direction by the bending element 31 according to the configuration example 1 ($\alpha_X =$

$\alpha_{X1} + \alpha_{X2}$). Similarly, the bending angle $\alpha_{Y1}$ in the Y direction by the mirror 32 and the bending angle $\alpha_{Y2}$ in the Y direction by the bending element 31 amount to the bending angle $\alpha_Y$ in the Y direction by the bending element 31 according to the configuration example 1 ($\alpha_Y = \alpha_{Y1} + \alpha_{Y2}$).

It is possible to favorably address the large bending angle $\alpha$ requested from the light distribution element 30 by using the mirrors 32 and the bending element 31 in combination as the light distribution element 30 as in this configuration example 4. This offers the large bending angles $\alpha_X$ and $\alpha_Y$ for the light distribution element 30 and it is thus possible to further increase the fields of view $\theta$ and $\varphi$ of the light irradiation device 2 and irradiate the wider-range distance measurement target area 5 with light.

(5) Configuration Example 5

As illustrated in FIG. 14, the light irradiation device 2 according to the configuration example 5 of the present embodiment includes the light source 20, the bending element 31 and the plurality of mirrors 32 serving as the light distribution element 30, and the diffuser plate 40. In the light irradiation device 2 according to the configuration example 5, the light source 20, the bending element 31, the mirrors 32, and the diffuser plate 40 are disposed in this order in a light irradiation path from the light source 20 to the distance measurement target area 5.

The light distribution element 30 according to the configuration example 5 illustrated in FIG. 14 includes the bending element 31 and the plurality of mirrors 32 described above. That is, the light distribution element 30 according to the configuration example 5 illustrated in FIG. 14 is an example of a combination of the bending element 31 including the prism structures 37 and 38 according to the configuration example 1 illustrated in FIG. 10 and the mirrors 32 according to the configuration example 3 illustrated in FIG. 12.

In the configuration example 5, the laser light 51 from the light source 20 first enters the bending element 31 and is primarily bent at predetermined primary bending angles $\alpha_{X1}$ and $\alpha_{Y1}$. Subsequently, the bent light primarily bent by the bending element 31 enters any of the mirror 32 and is secondarily bent at predetermined secondary bending angles $\alpha_{X2}$ and $\alpha_{Y2}$. The bent light 52 emitted from the mirror 32 enters the diffuser plate 40 and is diffused, and the irradiation area 7 of the distance measurement target area 5 is then irradiated with the bent light 52.

In this way, the bending element 31 and the mirrors 32 according to the configuration example 5 serve for the bending function of the one bending element 31 according to the configuration example 1 described above for the laser light 51. That is, the bending angle $\alpha_{X1}$ in the X direction by the bending element 31 according to the configuration example 5 and the bending angle $\alpha_{X2}$ in the X direction by any of the mirrors 32 amount to the bending angle $\alpha_X$ in the X direction by the bending element 31 according to the configuration example 1 ($\alpha_X = \alpha_{X1} + \alpha_{X2}$). Similarly, the bending angle $\alpha_{Y1}$ in the Y direction by the bending element 31 and the bending angle $\alpha_{Y2}$ in the Y direction by the mirror 32 amount to the bending angle $\alpha_Y$ in the Y direction by the bending element 31 according to the configuration example 1 ($\alpha_Y = \alpha_{Y1} + \alpha_{Y2}$).

It is possible to favorably address the large bending angle $\alpha$ requested from the light distribution element 30 by using the bending element 31 and the mirrors 32 in combination as the light distribution element 30 as in this configuration example 5. This offers the large bending angles $\alpha_X$ and $\alpha_Y$ for the light distribution element 30 and it is thus possible to further increase the fields of view $\theta$ and $\varphi$ of the light irradiation device 2 and irradiate the wider-range distance measurement target area 5 with light.

(6) Configuration Example 6

As illustrated in FIG. 15, the light irradiation device 2 according to the configuration example 6 of the present embodiment includes the light source 20, the plurality of prisms 33 serving as the light distribution element 30, and the diffuser plate 40. In the light irradiation device 2 according to the configuration example 6, the light source 20, the prisms 33, and the diffuser plate 40 are disposed in this order in a light irradiation path from the light source 20 to the distance measurement target area 5.

The light distribution element 30 according to the configuration example 6 illustrated in FIG. 15 includes the plurality of prisms 33 instead of the bending element 31 according to the configuration example 1 illustrated in FIG. 10 described above. The prisms 33 are optical elements each having a function of refracting light. The prism 33 has an inclined surface that is inclined at a predetermined angle with respect to the optical axis direction (Z direction) of the laser light 51. The laser light 51 is refracted on this inclined surface of the prism 33. In this way, the prism 33 refracts the laser light 51 from the light source 20 to bend the laser light 51 at the predetermined bending angles $\alpha_X$ and $\alpha_Y$ and emit the bent light 52 traveling in a predetermined bending direction.

It is possible to change the bending angle $\alpha_X$ at which the laser light 51 is bent in the X direction by adjusting the inclination angle of the inclined surface of the prism 33 in the X direction. Similarly, it is possible to change the bending angle $\alpha_Y$ at which the laser light 51 is bent in the Y direction by adjusting the inclination angle of the inclined surface of the prism 33 in the Y direction. In addition, the plurality of prisms 33 having different inclination angles of the inclined surfaces in the X and Y directions is installed in association with the plurality of light emitting elements 21a to 21f of the light source 20. This allows the plurality of prisms 33 differently disposed to face different directions to bend the pieces of laser light 51a to 51f from the light emitting elements 21a to 21f in desired bending directions (X and Y directions) at the bending angles $\alpha_X a$ to $\alpha_x f$ and $\alpha_Y a$ to $\alpha_Y f$ different from each other. From this viewpoint, the plurality of prisms 33 according to the configuration example 6 corresponds to the plurality of bending units included in the light distribution element 30.

It is possible to bend the plurality of pieces of laser light 51 from the light source 20 as with the bending element 31 according to the configuration example 1 described above by using the plurality of prisms 33 as the light distribution element 30 as in this configuration example 6. Note that the light distribution element 30 may include a combination of the prisms 33 as illustrated in FIG. 15 and the bending element 31 or the mirrors 32 described above.

The configuration examples 1 to 6 of the light irradiation device 2 according to the present embodiment have been described so far with reference to FIGS. 10 to 15. In any of the configuration examples 1 to 6 of FIGS. 10 to 15, the light distribution element 30 (the bending element 31, the mirrors 32, the prisms 33, and the like) is disposed between the light source 20 and the diffuser plate 40. This makes it possible to bend the laser light 51 by the light distribution element 30 and then diffuse that bent light 52 by the diffuser plate 40 to irradiate the distance measurement target area 5 with the diffused light 53. It is thus possible to increase the uniformity of the diffused light 53. The positional relationship between the light distribution element 30 and the diffuser plate 40 is not, however, limited to the examples of FIGS. 10 to 15. For example, the light distribution element 30 (the bending element 31, the mirrors 32, the prisms 33, and the like) may be disposed between the diffuser plate 40 and the distance measurement target area 5. This causes the diffuser plate 40 to diffuse the laser light 51 and then causes the light distribution element 30 to bend the diffused light. The uniformity of pieces light to be radiated to the respective irradiation areas 7 may therefore decrease slightly, but it is possible to execute a beam steering operation on each of the irradiation areas 7 with no problem.

[7. Conclusion]

The light irradiation device 2 including the diffuser plate 40 according to the present embodiment has been described so far. According to the present embodiment, the light irradiation device 2 that diffuses irradiation light by using the diffuser plate 40 has a configuration in which the distance measurement target area 5 is divided into the plurality of irradiation areas 7a to 7f and the light distribution element 30 is disposed to be opposed to the diffuser plate 40. The light distribution element 30 bends pieces of light (e.g., the plurality of pieces of laser light 51a to 51f) traveling from the light source 20 to the distance measurement target area 5 in a plurality of different bending directions. This makes it possible to partially radiate the pieces of bent light to the partial irradiation areas 7a to 7f narrowed within the distance measurement target area 5.

Furthermore, the light source 20 may include the plurality of light emitting elements 21a to 21f arranged one-dimensionally or two-dimensionally and the light irradiation device 2 may include the control unit 50 that controls the light emission of the plurality of light emitting elements 21a to 21f. In addition, the light distribution element 30 may be configured to bend the plurality of pieces of light 51a to 51f emitted from the plurality of light emitting elements 21a to 21f in bending directions different from each other. Furthermore, the diffuser plate 40 may diffuse the respective pieces of light 52a to 52f bent by the light distribution element 30 and respectively irradiate the irradiation areas 7a to 7f of the distance measurement target area 5 with the pieces of diffused light 53a to 53f.

This configuration makes it possible to sequentially switch the irradiation areas 7a to 7f to be partially irradiated with some of the pieces of diffused light 53a to 53f within the distance measurement target area 5 by switching the light emitting elements 21a to 21f to emit pieces of light by the control unit 50 in a predetermined order. This allows a beam steering operation (see FIG. 6) of scanning the distance measurement target area 5 by using the switched irradiation areas 7a to 7f to be executed.

In this regard, the conventional light irradiation device 2" (see FIG. 3) including the diffuser plate 16 has a problem that it is not possible to execute a beam steering operation because of the principle thereof. In addition, it is possible for the conventional light irradiation device 2' (see FIG. 2) including the lens unit 14 to execute a beam steering operation, but the light irradiation device 2' has a problem that the device size and cost increase.

In contrast, according to the present embodiment, it is possible for the light irradiation device 2 that diffuses light from the light source 20 by using the diffuser plate 40 to favorably execute the beam steering operation described above by additionally including the light distribution element 30 between the light source 20 and the distance measurement target area 5. This makes it possible to increase both the range of the whole irradiation areas 7a to 7f (distance measurement target area 5) that can be irradiated by the light irradiation device 2 with the pieces of diffused light 53 and the irradiation distance of the diffused light 53.

In addition, the present embodiment adopts a configuration in which the light 51 is diffused by using the diffuser plate 40 having a simple device configuration without using the lens unit 14 having a complicated device configuration. This solves the problem that the device size and cost increase as with the conventional light irradiation device 2' and allows the size and the cost of the light irradiation device 2 to be reduced, contributing the smaller light irradiation device 2.

Additionally, it is possible to diffuse pieces of irradiation light by the diffuser plate 40 and respectively irradiate the irradiation areas 7a to 7f with the pieces of uniform diffused light 53a to 53f. Even if some of the plurality of light emitting elements 21 provided in the light source 20 that is a surface light source are damaged or broken, it is thus possible to solve the problem (see FIG. 4) that the irradiation area 7e corresponding to the damaged light emitting element 21 is irradiated with no light, resulting in an unirradiated area. It is possible to stably measure the whole of the distance measurement target area 5.

Example

Next, a light irradiation device according to an Example of the present invention will be described. Note that the following Example is merely an example to exhibit the effects and the practicability of the light irradiation device according to the present invention and the present invention is not limited to the following Example.

In this Example, the light irradiation device 2 having any of the configurations illustrated in FIGS. 5 to 10 described above was manufactured and a simulation was carried out to measure the relative intensity distribution of the diffused light radiated to the distance measurement target area 5 by using the light irradiation device 2. As the light source 20, a surface light source was used in which the six light emitting elements 21a to 21f each including VCSELs were arranged on the light emitting surface 22 in two rows and three columns. As the light distribution element 30, the bending element 31 having a rectangular flat-plate shape with the prism structures 37 and 38 formed on both surfaces thereof as illustrated in any of FIGS. 7 to 9 described above was used. As the diffuser plate 40, the diffuser plate 40 having a rectangular flat-plate shape with the microlens array 42 formed on one surface thereof was used. As materials of the bending element 31 and the diffuser plate 40, optical materials each having a refractive index of about 1.5 were used. The bending angles $\alpha_X$ and $\alpha_Y$ by the bending element 31 and the diffusion angles $\beta_X$ and $\beta_Y$ by the diffuser plate 40 were set such that the field of view $\theta$ of the diffused light 53 in the X direction radiated from the light irradiation device 2 was about 90° and the field of view $\varphi$ in the Y direction was about 50°.

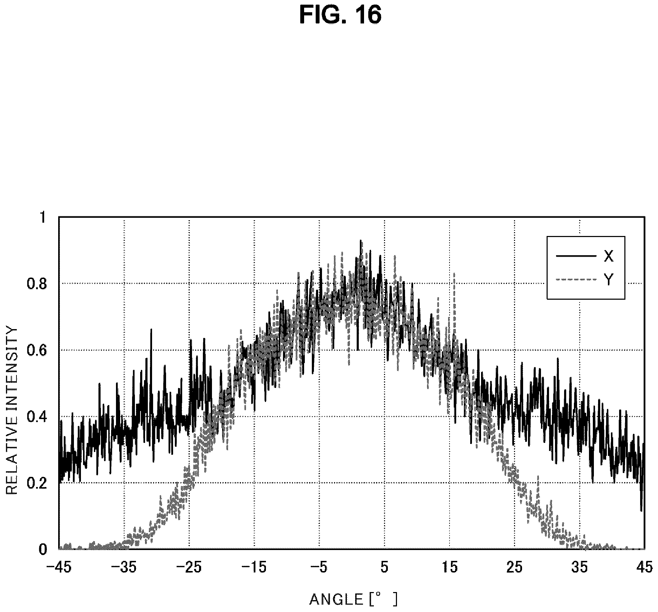

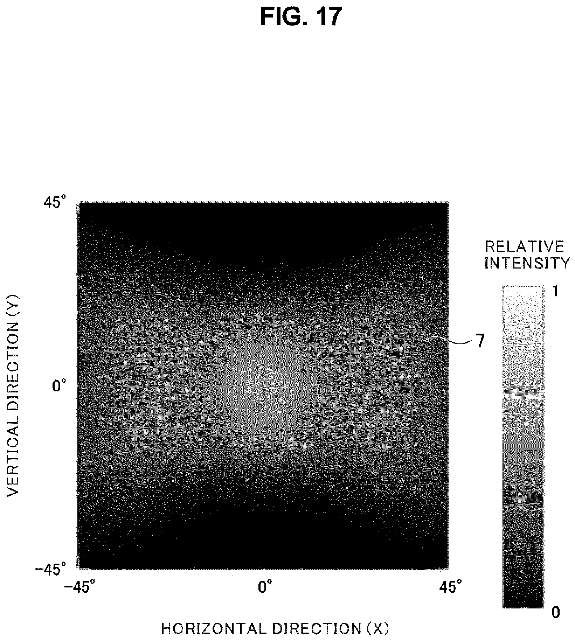

FIG. 16 is a graph illustrating the relative intensity distribution of pieces of irradiation light obtained when all the six light emitting elements 21a to 21f emit pieces of light (are turned on) at the same time in the light irradiation device 2 according to this Example. FIG. 17 is a photograph illustrating the relative intensity distribution of the irradiation light.

As illustrated in FIGS. 16 and 17, the whole of the irradiation area 7 having a substantially rectangular shape was irradiated with diffused light in the field of view $\theta$ in the X direction within a range of about 90° (-45° to +45°) and the field of view $\varphi$ in the Y direction within a range of about 50° (-25° to +25°). It is then shown that the irradiation light of the whole of the irradiation area 7 has mostly uniform relative intensity distribution and also has a gentle intensity change. This confirmed that the light irradiation device 2 according to this Example irradiated the irradiation area 7 mostly uniformly with diffused light without causing an unirradiated region and it was possible to favorably measure the whole of the irradiation area 7 within the distance measurement target area 5.

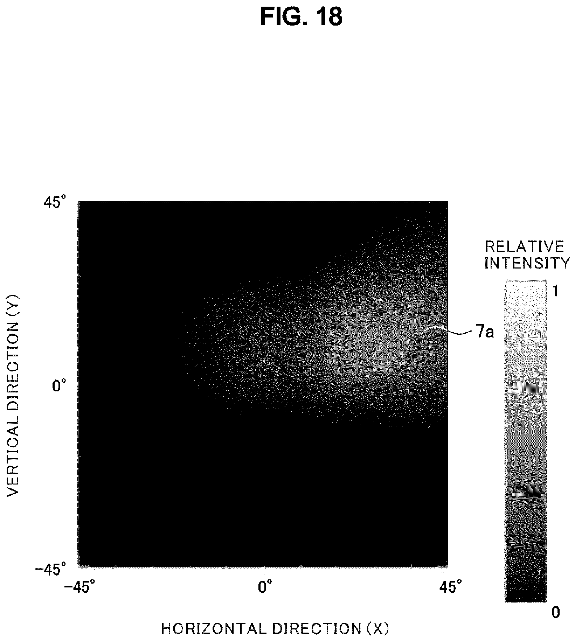

FIGS. 18 to 20 are photographs each illustrating the relative intensity distribution of pieces of irradiation light emitted when the three upper light emitting elements 21a to 21c of the six light emitting elements 21a to 21f sequentially emit pieces of light (are turned on) in the light irradiation device 2 according to this Example.

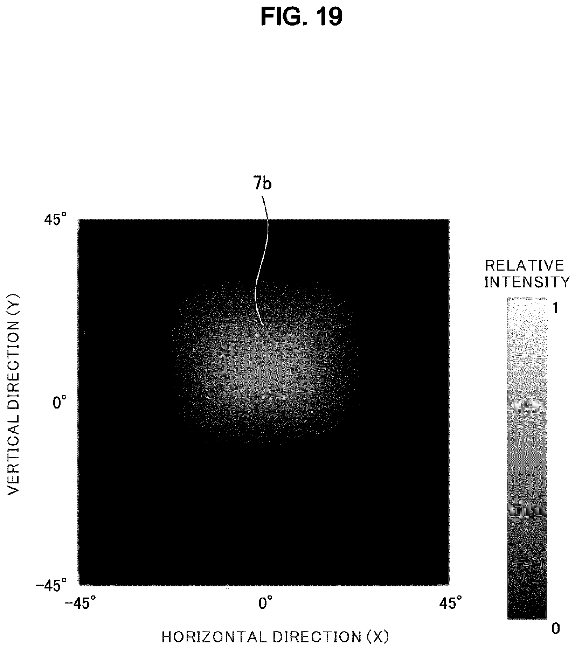

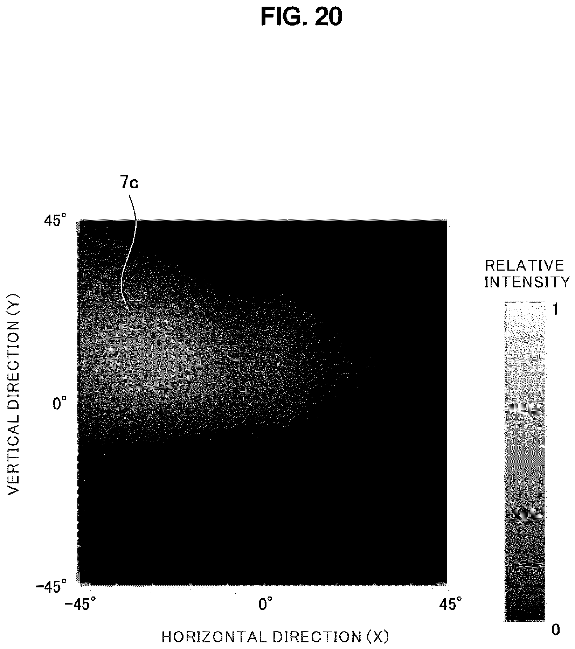

As illustrated in FIG. 18, when only the one light emitting element 21a disposed at the upper left section when facing the light emitting surface 22 emitted light, only the irradiation area 7a having a substantially rectangular shape and located at the upper right section of the distance measurement target area 5 was irradiated with the diffused light 53a. Subsequently, as illustrated in FIG. 19, when only the one light emitting element 21b disposed at the upper middle section when facing the light emitting surface 22 emitted light, only the irradiation area 7b having a substantially rectangular shape and located at the upper middle section of the distance measurement target area 5 was irradiated with the diffused light 53b. After that, as illustrated in FIG. 20, when only the one light emitting element 21c disposed at the upper right section when facing the light emitting surface 22 emitted light, only the irradiation area 7c having a substantially rectangular shape and located at the upper left section of the distance measurement target area 5 was irradiated with the diffused light 53c.

In this way, it is shown that the irradiation areas 7a to c to be irradiated with the pieces of diffused light 53 are sequentially switched within the distance measurement target area 5 by sequentially switching on and off the light emitting elements 21a to 21c to allow the distance measurement target area 5 to be scanned. This confirmed that the light irradiation device 2 according to this Example allowed a beam steering operation of partially radiating the diffused light 53 to each of the irradiation areas 7 within the distance measurement target area 5 to be favorably executed.

The embodiment of the present invention has been described so far with reference to the appended drawings, but it goes without saying that the present invention is not limited to this embodiment. A person skilled in the art may obviously find various alterations and modifications within the scope of the claims, and it should be understood that they will naturally come under the technical scope of the present invention.

For example, in the embodiment described above, the example has been described in which the light source 20 includes a vertical cavity surface emitting laser (VCSEL), but the present invention is not limited to this example. The light source may include, for example, various surface emitting semiconductor lasers such as a vertical external cavity surface emitting laser (VECSEL: Vertical External Cavity Surface Emitting Laser), an edge emitting laser (EEL: Edge Emitting Laser), or another surface emitting laser (SEL: Surface Emitting Laser).

In addition, in the embodiment described above, the example has been described in which the light source 20 is a surface light source including the plurality of light emitting elements 21a to 21f, but the present invention is not limited to this example. As long as the light source is a light source having the area of a light emitting surface, the light source may be a single light source or may be a point light source instead of the surface light source. The light source having the area described above includes a point light source that emits diffused light in addition to a typical surface light source that emits a plurality of pieces of parallel light or diffused light from the light emitting surface. Even if the light source is a point light source, the point light source is disposed apart from the light distribution element to cause diffused light emitted from the point light source to serve as light having predetermined area at a position at which the diffused light enters the light distribution element. This makes it possible to bend the pieces of diffused light from the point light source by the light distribution element in directions different from each other to allow the light to be partially radiated to each of irradiation areas obtained by dividing the distance measurement target area.

Reference Signs List

1 optical distance measurement apparatus
2 light irradiation device
3 light detection device
4 controller
5 distance measurement target area
6 distance measurement target
7, 7a to 7f irradiation area
20 light source
21, 21a to 21f light emitting element
30 light distribution element
31 bending element
32 mirror
33 prism
35, 35a to 35f bending unit
36 base member
37, 37A, 37B first prism structure
38, 38A, 38B second prism structure
40 diffuser plate
41 base member
42 microlens array
51, 51a to 51f laser light
52, 52a to 52f bent light
53, 53a to 53f diffused light

**Claims**

1. A light irradiation device that is provided in an optical distance measurement apparatus and irradiates a distance measurement target area with light, the light irradiation device comprising:

   a light source; and
   a light distribution element configured to bend pieces of light in a plurality of bending directions, the pieces of light traveling from the light source to the distance measurement target area.

2. The light irradiation device according to claim 1, further comprising a diffuser plate that is disposed between the light source and the distance measurement target area, wherein
   the diffuser plate is disposed to be opposed to the light distribution element.

3. The light irradiation device according to claim 2, wherein

   the light source includes a plurality of light emitting elements arranged one-dimensionally or two-dimensionally,
   the light distribution element bends a plurality of pieces of light emitted from the plurality of light emitting elements in bending directions different from each other, and
   the light irradiation device further includes a control unit configured to control light emission of the plurality of light emitting elements.

4. The light irradiation device according to claim 3, wherein

   the plurality of respective light emitting elements corresponds to a plurality of irradiation areas obtained by one-dimensionally or two-dimensionally dividing the distance measurement target area,
   the plurality of respective pieces of light emitted from the plurality of light emitting elements is radiated to the plurality of irradiation areas through the light distribution element and the diffuser plate, and
   the control unit switches light emitting elements to emit pieces of light among the plurality of light emitting elements.

5. The light irradiation device according to claim 4, wherein

   the light distribution element includes a plurality of bending units corresponding to the plurality of respective irradiation areas, and
   the plurality of respective bending units bends the plurality of pieces of light emitted from the plurality of light emitting elements in bending directions different from each other and guides the plurality of pieces of light to the plurality of irradiation areas.

6. The light irradiation device according to claim 5, wherein

the light distribution element is disposed between the light source and the diffuser plate,
the plurality of respective bending units bends the plurality of pieces of light emitted from the plurality of light emitting elements in bending directions different from each other and emits the plurality of pieces of light to the diffuser plate, and
the diffuser plate diffuses a plurality of pieces of respective bent light coming from the plurality of bending units and radiates a plurality of respective pieces of diffused light traveling in directions different from each other to the plurality of irradiation areas.

7. The light irradiation device according to claim 2, wherein the light distribution element and the diffuser plate are disposed in contact with each other, or disposed by being bonded with a bonding member in between.

8. The light irradiation device according to claim 1, wherein the light distribution element includes a bending element including a prism structure.

9. The light irradiation device according to claim 8, wherein the prism structures are formed on both surfaces of the bending element.

10. The light irradiation device according to claim 9, wherein

a first prism structure is formed on one surface of the bending element and a second prism structure is formed on another surface of the bending element, and
the first prism structure and the second prism structure extend in directions crossing each other in a plan view.

11. The light irradiation device according to claim 1, wherein the light distribution element includes a mirror.

12. The light irradiation device according to claim 2, wherein the diffuser plate includes a microlens array.

13. An optical distance measurement apparatus comprising:

the light irradiation device according to any one of claims 1 to 12; and
a light detection device configured to detect light radiated from the light irradiation device and reflected by a distance measurement target.

14. A vehicle comprising
the optical distance measurement apparatus according to claim 13.

# FIG. 1

# FIG. 2

# FIG. 3

# FIG. 4

# FIG. 5

# FIG. 6

UPPER LEFT SECTION
IS TURNED ON

UPPER MIDDLE SECTION
IS TURNED ON

UPPER RIGHT SECTION
IS TURNED ON

# FIG. 7

# FIG. 8

# FIG. 9

# FIG. 10

# FIG. 11

# FIG. 12

# FIG. 13

# FIG. 14

# FIG. 15

# FIG. 16

# FIG. 17

# FIG. 18

# FIG. 19

# FIG. 20

## INTERNATIONAL SEARCH REPORT

| International application No. |
| --- |
| **PCT/JP2023/035042** |

**A. CLASSIFICATION OF SUBJECT MATTER**

*G01S 7/481*(2006.01)i; *G01C 3/06*(2006.01)i; *G01S 17/10*(2020.01)i; *G01S 17/931*(2020.01)i; *G02B 3/00*(2006.01)i; *G02B 5/02*(2006.01)i; *G02B 5/04*(2006.01)i

FI: G01S7/481 A; G01C3/06 120Q; G01C3/06 140; G01S17/931; G02B3/00 A; G02B5/02 C; G02B5/04 A; G02B5/04 Z; G01S17/10

According to International Patent Classification (IPC) or to both national classification and IPC

**B. FIELDS SEARCHED**

Minimum documentation searched (classification system followed by classification symbols)

G01S7/48-7/51, 17/00-17/95; G01B11/00-11/30; G01C3/00-3/32; G02B3/00; G02B5/02; G02B5/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | US 2021/0066893 A1 (SOS LAB CO., LTD.) 04 March 2021 (2021-03-04) | 1-5, 7-9, 12-14 |
|   | paragraphs [0324], [0382], [0463]-[0552], [1781]-[1827], fig. 1, 12-24, 135, 136 |  |
| A | paragraphs [0324], [0382], [0463]-[0552], [1781]-[1827], fig. 1, 12-24, 135, 136 | 10 |
| X | US 2020/0341116 A1 (CONTINENTAL AUTOMOTIVE SYSTEMS, INC.) 29 October 2020 (2020-10-29) | 1-7, 11, 13-14 |
|   | paragraphs [0018]-[0059], fig. 1-5 |  |
| A | paragraphs [0018]-[0059], fig. 1-5 | 10 |
| X | KR 10-2018-0058067 A (KOREA ELECTRONICS TECHNOLOGY INSTITUTE) 31 May 2018 (2018-05-31) | 1, 8, 11, 13-14 |
|   | paragraphs [0027]-[0049], fig. 1-6 |  |
| A | paragraphs [0027]-[0049], fig. 1-6 | 10 |

| ✓ | Further documents are listed in the continuation of Box C. | ✓ | See patent family annex. |
| --- | --- | --- | --- |

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **13 October 2023** | **07 November 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** |  |
|  | Telephone No. |

Form PCT/ISA/210 (second sheet) (January 2015)

**INTERNATIONAL SEARCH REPORT**

| International application No. |
| --- |
| **PCT/JP2023/035042** |

| C. | DOCUMENTS CONSIDERED TO BE RELEVANT | |
| --- | --- | --- |
| Category* | Citation of document, with indication, where appropriate, of the relevant passages | Relevant to claim No. |
| A | JP 2007-214564 A (AVAGO TECHNOLOGIES GENERAL IP (SINGAPORE) PRIVATELTD) 23 August 2007 (2007-08-23)<br>entire text, all drawings | 1-14 |
| A | JP 2011-013631 A (SUMITOMO CHEMICAL CO LTD) 20 January 2011 (2011-01-20)<br>entire text, all drawings | 1-14 |
| A | JP 2021-099278 A (HITACHI LG DATA STORAGE INC) 01 July 2021 (2021-07-01)<br>entire text, all drawings | 1-14 |
| A | CN 213182011 U (HESAI PHOTONICS TECHNOLOGY CO., LTD.) 11 May 2021 (2021-05-11)<br>entire text, all drawings | 1-14 |

Form PCT/ISA/210 (second sheet) (January 2015)

INTERNATIONAL SEARCH REPORT
Information on patent family members

International application No.

**PCT/JP2023/035042**

| Patent document cited in search report | | | Publication date (day/month/year) | Patent family member(s) | | | Publication date (day/month/year) |
|---|---|---|---|---|---|---|---|
| US | 2021/0066893 | A1 | 04 March 2021 | WO | 2021/040250 | A1 | |
| | | | | paragraphs [0400], [0464], [0564]-[0665], [2056]-[2103], fig. 1, 12-24, 135, 136 | | | |
| | | | | EP | 4024631 | A1 | |
| | | | | KR | 10-2021-0027004 | A | |
| US | 2020/0341116 | A1 | 29 October 2020 | (Family: none) | | | |
| KR | 10-2018-0058067 | A | 31 May 2018 | (Family: none) | | | |
| JP | 2007-214564 | A | 23 August 2007 | US | 2007/0181810 | A1 | |
| | | | | entire text, all drawings | | | |
| | | | | DE | 102007004609 | A1 | |
| JP | 2011-013631 | A | 20 January 2011 | (Family: none) | | | |
| JP | 2021-099278 | A | 01 July 2021 | US | 2021/0190917 | A1 | |
| | | | | entire text, all drawings | | | |
| | | | | CN | 113030994 | A | |
| CN | 213182011 | U | 11 May 2021 | (Family: none) | | | |

Form PCT/ISA/210 (patent family annex) (January 2015)

**EP 4 589 334 A1**

**REFERENCES CITED IN THE DESCRIPTION**

**Patent documents cited in the description**

- JP 2021047143 A

- JP 2021099278 A